# EUROPEAN PATENT SPECIFICATION

(11) **EP 3 491 718 B1**
(45) Date of publication and mention of the grant of the patent: **31.03.2021**
(21) Application number: 17787676.0
(22) Date of filing: 24.07.2017
(51) Int. Cl.: H02K 7/06, H02K 33/00

(54) **APPLICATOR ATTACHMENT TO CONVERT OSCILLATING ROTATIONAL MOTION TO ORTHOGONAL RECIPROCATING MOTION**
APPLIKATORAUFSATZ ZUR UMWANDLUNG EINER OSZILLIERENDEN DREHBEWEGUNG IN EINE ORTHOGONALE HIN- UND HERGEHENDE BEWEGUNG
ACCESSOIRE DE TYPE APPLICATEUR POUR CONVERTIR UN MOUVEMENT DE ROTATION OSCILLANT EN UN MOUVEMENT DE VA-ET-VIENT ORTHOGONAL

(30) Priority: 28.07.2016 US 201615222802; 28.07.2016 US 201615222822
(43) Date of publication of application: 05.06.2019
(73) Proprietor: L'Oreal, 75008 Paris (FR); Wong, Suk Ping, Sammamish, WA 98074 (US); Aragon, Joel Timothy, Redmond, WA 98052-4952 (US); Duncan, James Arthur, Kent, WA 98032 (US)
(72) Inventor: WONG, Suk, Ping, Sammamish, WA 98074 (US); ARAGON, Joel, Timothy, Redmond, WA 98052-4952 (US); DUNCAN, James, Arthur, Kent, WA 98032 (US)
(74) Representative: Casalonga
(86) International application number: PCT/US2017/043519
(87) International publication number: WO 2018/022506

(56) References cited:
- WO-A1-00/56208
- WO-A1-2009/057686
- GB-A- 2 287 887
- JP-A- H10 331 766
- US-A- 4 397 055
- US-A- 6 140 723
- US-A1- 2016 183 671

## Description

### SUMMARY

Devices for converting a rotary or oscillatory motion into an axial motion are disclosed in GB 2 287 887 A, US 2016/183671 A1, US 4 397 055 A, WO 00/56208 A1 and WO 2009/057686 A1.

The present disclosure is directed to a converter assembly for converting oscillating motion to orthogonal reciprocating motion with the features of claim 1. Preferred embodiments are disclosed in the dependent claims.

In an aspect, the present disclosure is directed to, among other things, an attachment to convert oscillating rotational motion to orthogonal reciprocating motion. In one embodiment, the converter assembly for converting oscillating motion to orthogonal reciprocating motion, the converter assembly generally includes an outer housing having a central axis; a follower movably associated with the outer housing and configured for reciprocating motion along the central axis, the follower including a cam following surface; and a cam rotatably couplable to the outer housing and configured for oscillating motion about the central axis with respect to the outer housing, wherein the interaction of the cam and the cam following surface may cause the follower to reciprocate along the central axis when the cam oscillates about the central axis.

In accordance with any of the embodiments described herein, the outer housing may include an aperture configured to receive an applicator tip.

In accordance with any of the embodiments described herein, the follower may further include an applicator tip mounting portion.

In accordance with any of the embodiments described herein, the applicator tip may be couplable to the applicator tip mounting portion.

In accordance with any of the embodiments described herein, the applicator tip may be an infuser tip.

In accordance with any of the embodiments described herein, the cam may further include a cam profile surface positioned to interface the cam following surface, wherein the cam profile surface may be a helix.

In accordance with any of the embodiments described herein, the converter assembly may be couplable to a personal care appliance handle through the outer housing.

In accordance with any of the embodiments described herein, the cam may be configured to interface an oscillating hub of the personal care appliance such that the oscillating motion of the oscillating hub is transferred to oscillating motion of the cam.

In accordance with any of the embodiments described herein, the follower may be movably associated with the outer housing by an elastic coupling.

In accordance with any of the embodiments described herein, the cam may further include a point configured to interface the cam following surface and cause the follower to reciprocate along the central axis.

In accordance with any of the embodiments described herein, the cam following surface may be arcuate.

In accordance with any of the embodiments described herein, the cam may include a recess with a cam recess profile surface, wherein the cam follower surface may closely interact with the cam recess profile surface to cause the follower to reciprocate along the central axis.

In accordance with any of the embodiments described herein, the applicator tip mounting portion may include a protrusion interfacing a slot in the outer housing, and wherein the protrusion may be configured to prevent rotation of the applicator tip mounting portion about the central axis.

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

### DESCRIPTION OF THE DRAWINGS

The foregoing aspects and many of the attendant advantages of the disclosed subject matter will become more readily appreciated as the same become better understood by reference to the following detailed description, when taken in conjunction with the accompanying drawings, wherein:
FIGURE 1 is a front right top perspective view of one representative embodiment of a converter connected to a handle of a personal care appliance in accordance with an aspect of the present disclosure;
FIGURE 2 is a rear left top perspective view of the converter of FIGURE 1;
FIGURE 3 is an exploded front right top perspective view of the converter of FIGURE 1;
FIGURE 4 is an exploded rear left top perspective view of the converter of FIGURE 1;
FIGURE 5 is an assembled, cross-sectional view of the converter of FIGURE 1;
FIGURE 6a is a partial cross-sectional perspective view of a cam follower assembly and a cam member of the converter of FIGURE 1, showing the cam member in a first rotational position and the cam follower assembly in a first translational position nearer to the cam member;
FIGURE 6b is a partial cross-sectional perspective view of a cam follower assembly and a cam member of the converter of FIGURE 1, showing the cam member in a second rotational position and the cam follower assembly in a second translational position farther from the cam member;
FIGURE 7 is a front right top perspective view of another example of a converter;
FIGURE 8 is a rear left top perspective view of the converter of FIGURE 7;
FIGURE 9 is an exploded front right top perspective view of the converter of FIGURE 7;
FIGURE 10 is an exploded rear left top perspective view of the converter of FIGURE 7;
FIGURE 11 is an assembled, cross-sectional view of the converter of FIGURE 7;
FIGURE 12a is a perspective view of a follower member and an oscillating hub of the converter of FIGURE 7, showing the oscillating hub in a first rotational position and the follower member in a first translational position nearer to the cam member;
FIGURE 12b is a perspective view of a follower member and an oscillating hub of the converter of FIGURE 7, showing the oscillating hub in a second rotational position and the follower member in a second translational position farther from the cam member;
FIGURE 12c is a perspective view of a follower member and an oscillating hub of the converter of FIGURE 7, showing the oscillating hub in a third rotational position and the follower member in a third translational position nearest to the cam member;
FIGURE 13 is an exploded front right top perspective view of another example of a converter;
FIGURE 14 is an exploded rear left top perspective view of the converter of FIGURE 13;
FIGURE 15 is an assembled, cross-sectional view of the converter of FIGURE 13;
FIGURE 16a is a partial cross-sectional perspective view of a follower member and an oscillating cam of the converter of FIGURE 13, showing the oscillating cam in a first rotational position and the cam follower assembly in a first translational position farther from the cam member;
FIGURE 16b is a partial cross-sectional perspective view of a follower member and an oscillating cam of the converter of FIGURE 13, showing the oscillating cam in a second rotational position and the cam follower assembly in a second translational position nearer to the cam member;
FIGURE 17 is a front right top perspective view of another example of a converter;
FIGURE 18 is a front right top perspective view of another example of a converter;
FIGURE 19 is a front right top perspective view of another example of a converter;
FIGURE 20 is a front right top perspective view of another example of a converter; and
FIGURE 21 is a front right top perspective view of another example of a converter.

### DETAILED DESCRIPTION

The following description provides several examples that relate to cosmetic applicators. In that regard, application of a wide variety of cosmetic formulas to human skin is a common practice. To apply the cosmetic formula, an infuser tip can be used. Generally described, the infuser tip includes a concave surface or a similarly structured area that retains formula for application to the skin. Infusion of cosmetic formula penetrates the outer layer of the skin. In this regard, the infuser tips generally apply cosmetic formula to the skin with a reciprocating (e.g., tapping) motion. Unlike skin scrubbing tips, which typically use oscillating motion, a component of oscillation is not dominant with infusion (although, a component of oscillation may be useful in some applications).

Although existing personal care appliances for use with skin scrubbing tips typically use oscillating motion, the converter assemblies of the present disclosure allow use of infuser tips with a reciprocating motion without the need to purchase additional personal care appliances specifically configured for reciprocating motion. In this regard, a single oscillating personal care appliance can be used with both skin scrubbing tips and infuser tips, using the converter assemblies of the present disclosure.

As used herein, the term "oscillation" refers to motion that is a regular periodic motion bi-directionally about a neutral position in a plane largely parallel to the skin surface. As used herein, the term "reciprocating" refers to motion that is a regular periodic motion bi-directionally about a neutral position in a plane largely perpendicular to the skin surface. These two terms are not mutually exclusive and both motions can be combined create more complex motions.

The following discussion provides examples of systems and/or apparatuses of a converter assembly for a personal care appliance that is configured to convert oscillating motion of the personal care appliance to reciprocating motion at an applicator tip, such as an infuser tip to provide treatment to a subject's epidermis. The reciprocating motion at the applicator tip may be translational, rotational, etc., or a combination thereof. In use, the converter assembly reciprocates the removable applicator tip over a subject's skin in order to infuse a cosmetic formula or otherwise treat a user's skin.

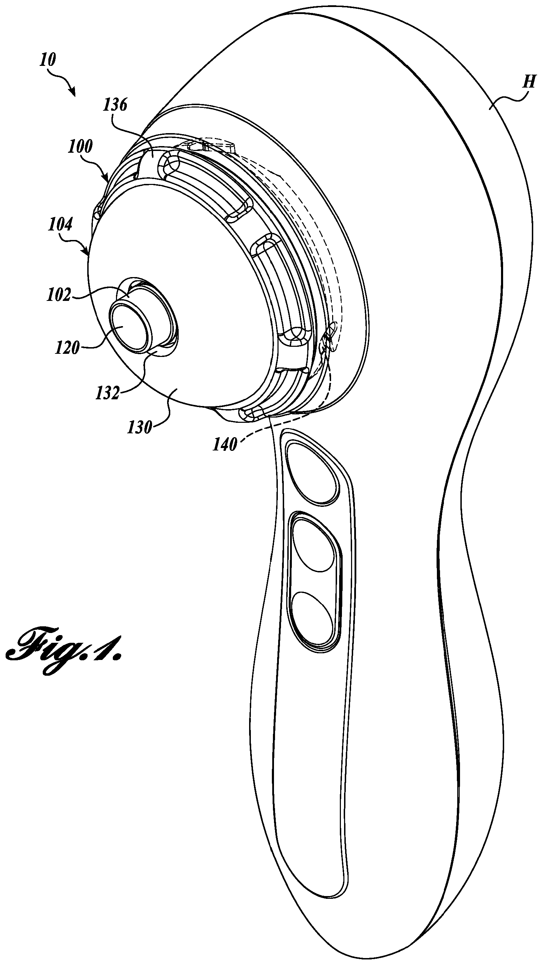

Referring to FIGURES 1-5, a first exemplary embodiment of a converter assembly 100 for converting oscillating motion of a personal care appliance H to reciprocating motion at an applicator tip is depicted. The converter assembly 100 is shown in use with an infuser tip for implementing one or more methodologies or technologies such as, for example, providing infusion of a cosmetic material to a user's skin. For example, some cosmetic formulas have improved penetration properties when applied with a tapping motion to the user's skin. However, as discussed above, conventional personal care appliances are generally configured with an oscillating motor to provide a skin scrubbing motion, which is not well-suited for infusion of cosmetic formulas.

Using the embodiments of the present disclosure, conventional personal care appliances with oscillating motors can be used to infuse cosmetic formula through a user's skin. Accordingly, the embodiments herein can be used with conventional personal care appliances to enhance penetration of the cosmetic formula to the user's skin in a way that would be difficult to accomplish with direct application of the formula alone. In that regard, the embodiments illustrated in the FIGURES have been designed for use with an infuser tip for applying cosmetic formulas to the user's skin (e.g., serum, eye cream, night cream, day cream, night lotion, day lotion, hand cream, neck cream, anti-aging cream, moisturizer etc.). Embodiments of the present disclosure are also suitable for applying a cosmetic formula to any surface of the user's body or another suitable surface.

Although the converter assembly 100 and the other exemplary embodiments are described and illustrated as being used with an infuser tip, it should be appreciated that the converter assemblies shown and described herein may be used with any suitable applicator tip and for any suitable use.

Referring to FIGURES 1-5, the converter assembly 100 will now be described in detail. In the illustrated embodiment, the converter assembly 100 generally includes an applicator tip, such as an infuser tip 102, removably coupled to a cam follower assembly 106, and a cam member 108 movable by an oscillating hub 110 of a personal care appliance H, wherein oscillating motion of the cam member 108 causes reciprocating motion of the cam follower assembly 106 (and infuser tip 102). In this regard, the converter assembly 100 will be referred to hereinafter as a cam driven converter assembly 100.

The cam driven converter assembly 100 is operably attachable to the personal care appliance H by interfacing the oscillating hub 110. The oscillating hub 110 is secured to a shaft of an oscillating motor (not shown) within the personal care appliance H using a motor shaft slot 192. The motor shaft is removably secured within the motor shaft slot 192 in a manner well known in the art such that rotation of the motor shaft oscillates the oscillating hub 110. In some embodiments, the oscillating hub 110 is press-fit onto the motor shaft such that it is semi-permanently coupled to the personal care appliance H, and not intended for removal by the user. Further description of the attachment of the cam driven converter assembly 100 to the oscillating hub 110 will be provided below.

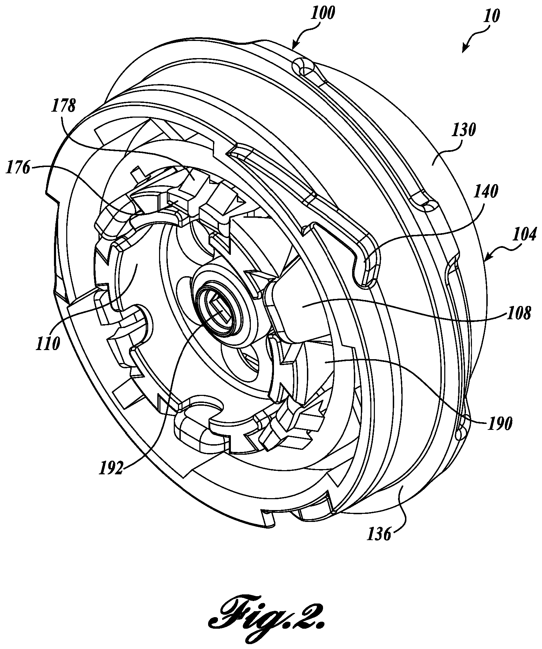

The converter assembly 100 is also removably attached to the personal care appliance H such that the converter assembly 100 may interface the oscillating hub 110. Although the converter assembly 100 may be removably attached to the personal care appliance H in any suitable manner, in the illustrated embodiment, the converter assembly 100 includes at least one body locking slot 140 in an outer housing 104 that is configured to selectively interface a protrusion (not shown) on the personal care appliance H. The body locking slot 140 is a turn-to-lock type of slot configured to interface the protrusions of the personal care appliance H. In this regard, the protrusions travel in the body locking slot 140 as the converter assembly 100 is twisted with respect to the personal care appliance H. The shape of the body locking slot 140 provides a coupling to the personal care appliance H that can be selectively unlocked by pushing the converter assembly 100 further into the opening of the personal care appliance H while twisting the converter assembly 100 in the opposite direction as installation. In other embodiments, other attachment methods may be used to attach the converter assembly 100 to the personal care appliance H. As shown in FIGURE 2, the combination of the converter assembly 100 and the oscillating hub 110 is generally designated as an appliance assembly 10.

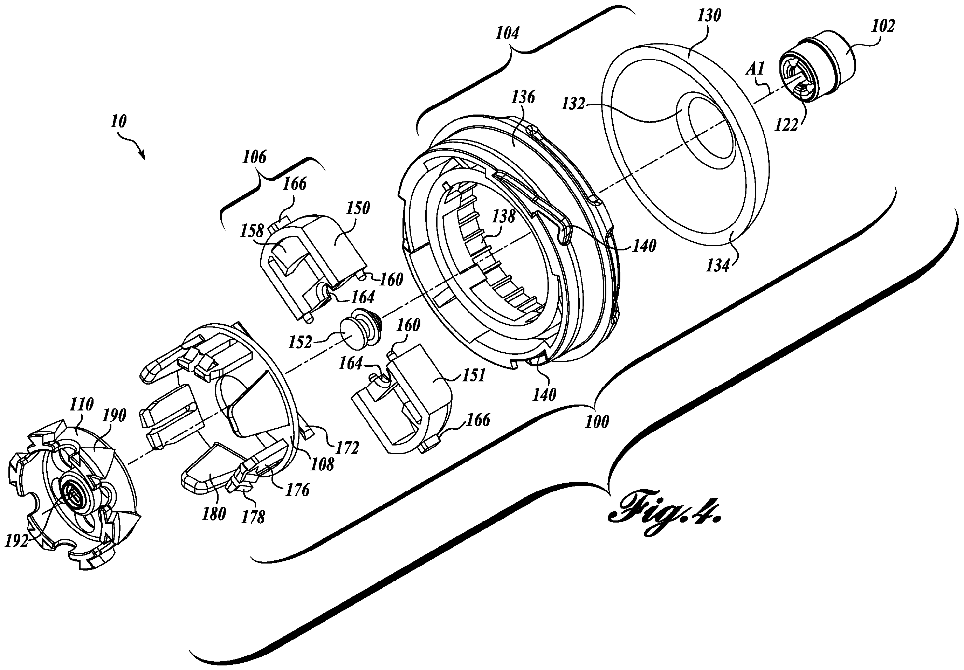

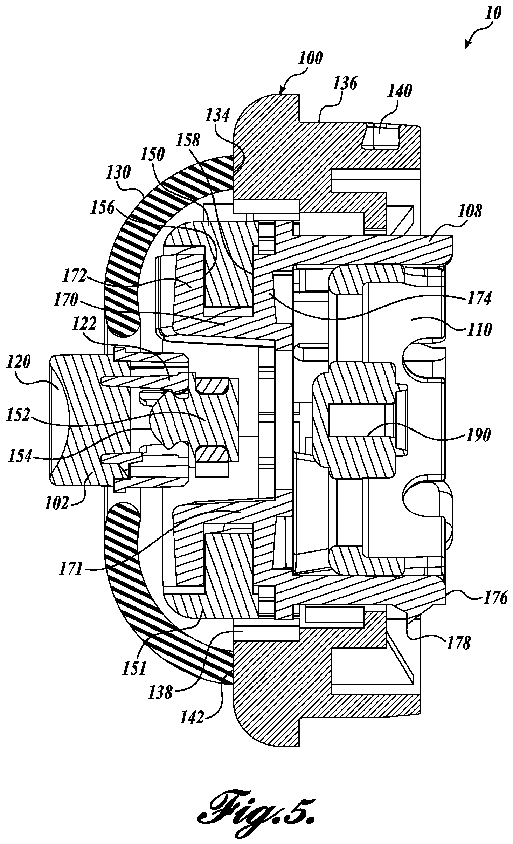

The infuser tip 102 will now be briefly described in detail. The infuser tip 102 is defined by a generally cylindrical body having an infusing surface 120 defined at one end of the body and an anchoring post locking tab 122 defined at the opposite end of the body (see FIGURES 4 and 5). The anchoring post locking tab 122 is configured to removably accept an infuser tip anchoring post 154 of the cam follower assembly 106 (see FIGURE 5). To anchor the infuser tip 102 to the cam follower assembly 106, the infuser tip anchoring post 154 is defined by a wider portion at the end of the infuser tip anchoring post 154 distal to the cam follower assembly 106. As the infuser tip 102 is pressed onto the infuser tip anchoring post 154, the anchoring post locking tab 122 flexes away from the infuser tip anchoring post 154 to provide clearance for the wider portion at the distal end, and then return to a position nearer the infuser tip anchoring post 154. In some embodiments, the anchoring post locking tab 122 includes a protrusion to interact with the narrow portion of the proximal end of the infuser tip anchoring post 154 such that the infuser tip 102 is retained on the infuser tip anchoring post 154.

As can be appreciated from the foregoing, the infuser tip 102 is configured to be removable from the cam driven converter assembly 100 without the removal of the cam driven converter assembly 100 from the personal care appliance H. More specifically, the infuser tip 102 is intended to be replaced independently from the remainder of the components of the cam driven converter assembly 100 such that a worn infuser tip 102 can be renewed or changed to an infuser tip with a different shape, suitable for use with a different formula, and/or suitable for use with a different skin type without replacement of other components. It should be appreciated that the infuser tip 102 may instead be removably secured within the cam driven converter assembly 100 in any other suitable manner.

As briefly noted above, the cam driven converter assembly 100 includes the outer housing 104. The outer housing 104 will now be described in detail. The outer housing 104 is generally configured to enclose the cam follower assembly 106, the cam member 108, and the oscillating hub 110. In this regard, the outer housing assembly 104 provides safety such that the user does not contact the moving components of the appliance assembly 10 besides the infuser tip 102.

In the depicted embodiment, the outer housing assembly 104 is manufactured from multiple components, including a cup 130 removably securable to an outer housing 136. However, in other embodiments, the outer housing assembly 104 is suitably manufactured from a single component or from more than two components. In embodiments where the outer housing assembly 104 is manufactured from multiple components, they are suitably joined using a variety of coupling methods, including adhesive, welding, co-molding, fasteners, pins, or the like. In some embodiments, the outer housing assembly 104 has components manufactured from plastic. In this case, the cup 130 further includes a cup welding surface 134 and the outer housing 136 further includes an outer housing welding surface 142. During assembly of the cup 130 to the outer housing 136, the cup welding surface 134 is sonically welded to the outer housing welding surface 142. In other embodiments, the cup welding surface 134 and the outer housing welding surface 142 provide a position for adhesive, fastener, or pin attachment.

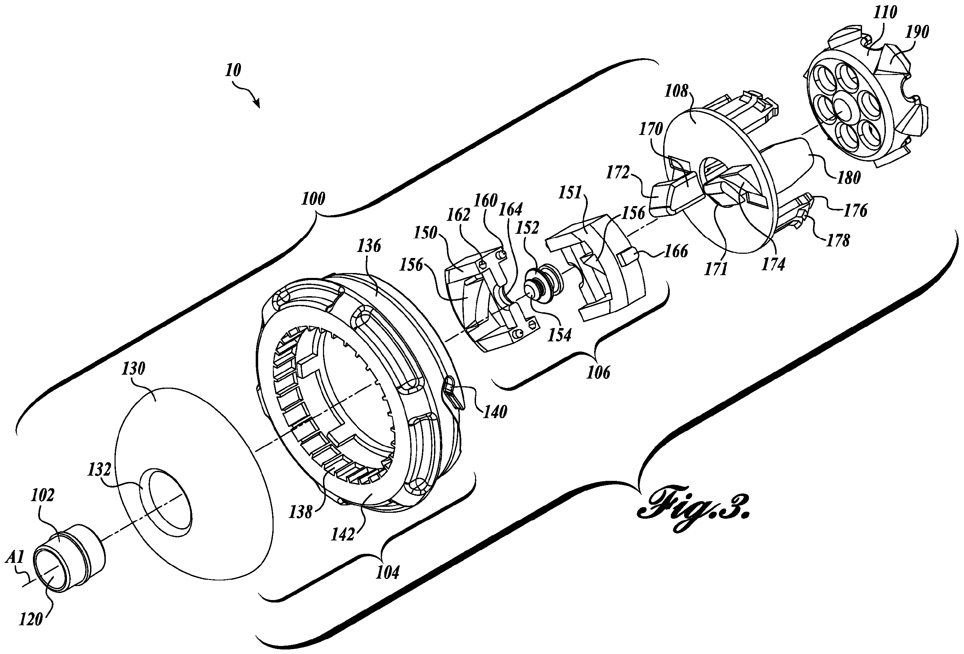

The cup 130 includes an infuser tip opening 132 sized and configured to receive and closely surround the infuser tip 102, while allowing reciprocating movement of the infuser tip 102 during use. The infuser tip opening 132 defines a central axis A1 running through the center of the cam follower assembly 106, the cam member 108, and the oscillating hub 110, as shown in FIGURES 3 and 4.

Referring specifically to FIGURES 3 and 4, the cam follower assembly 106 suitable for converting oscillating motion of the cam member 108 to reciprocating motion of the infuser tip 102 will now be described in detail. The cam follower assembly 106 includes at least one cam follower configured to follow the cam member 108 as it oscillates. In the illustrated embodiment, the cam follower assembly 106 includes first and second cam followers 150 and 151 that are securable together. Although the first and second cam followers 150 and 151 may be secured together in any suitable manner, in the depicted embodiment, the first and second cam followers 150 and 151 are secured together through at least one pin 160 extending from one of the first and second cam followers 150 and 151 that is receivable within a pin aperture 162 that is defined in the other of the first and second cam followers 150 and 151.

When secured together, an infuser tip anchor aperture 164 is defined between the first and second cam followers 150 and 151. The infuser tip anchor aperture 164 is sized and configured to receive the infuser tip anchor 152 of the infuser tip 102. However, in other embodiments, the infuser tip anchor 152 may be integrated into the cam follower assembly 106 such that it forms a single piece.

Aspects of the cam follower assembly 106 (defined by the first and second cam followers 150 and 151) for following the cam member 108 as it oscillates will now be described. The cam follower assembly 106 includes at least one upper cam follower ramp 156 disposed on a first side of the first cam follower 150 and a lower cam follower ramp 158 disposed on an opposite side of the first cam follower 150. In the illustrated embodiment, the upper and lower cam follower ramps 156 and 158 generally define an overall helical shape that is configured to follow a correspondingly shaped portion of the cam member 108 as it oscillates. The upper and lower cam follower ramps 156 and 158 are configured to interface with and follow the cam member 108 as it oscillates to move the cam follower assembly 106 linearly along axis A1. In that regard, the cam follower assembly 106 must be restricted from rotating when interfacing with the cam member 108 (i.e, it must be limited to substantially linear movement along axis A1).

The cam follower assembly 106 may be limited to substantially linear movement along axis A1 in any suitable manner. In the depicted embodiment, the cam follower assembly 106 interfaces with the outer housing assembly 104 to prevent rotation of the cam follower assembly 106 when it is moved by the cam member 108. More specifically, a cam follower clocking slot 138 extends axially along an interior surface of the outer housing assembly 104 that is configured to interface an outer housing clocking slot protrusion 166 extending laterally from an outer edge of the first cam follower 150. The cam follower clocking slot 138 is configured to allow reciprocating motion of the cam follower 150 in the direction of the central axis A1 and along the length of the cam follower clocking slot 138, but generally prevents the cam follower assembly 106 from rotating or oscillating about the central axis A1.

In the illustrated embodiment, a plurality of cam follower clocking slots 138 provide numerous clocking locations for the cam follower assembly 106. As shown in FIGURE 3, each outer housing clocking slot protrusion 166 of the first cam follower 150 interfaces a single cam follower clocking slot 138. In this regard, if first and second cam followers 150 and 151 are utilized, two corresponding cam follower clocking slots 138 interface the clocking slot protrusions 166 of each of the first and second cam followers 150 and 151. In some embodiments, the cam follower assembly 106 utilizes more than two cam follower clocking slots 138 during use of the cam driven converter assembly 100, which provide further stability, but may also increase friction of the assembly.

With the cam follower assembly 106 limited to substantially linear movement along axis A1, the cam follower assembly 106 will reciprocate when interfacing with the oscillating cam member 108. In that regard, the cam member 108 will now be described in detail. The cam member 108 includes first and second cam protrusions 170 and 171 extending from an upper surface of the cam member 108 that are configured to interface with the first and second upper and lower cam follower ramps 156 and 158 of the cam follower assembly 106. The first and second cam protrusions 170 and 171 are substantially identical; and therefore, only the first cam protrusion 170 will be described in detail.

The first cam protrusion 170 includes an upper cam ramp protrusion 172 and a lower cam ramp protrusion 174. The upper cam ramp protrusion 172 is on a distal end of the first cam protrusion 170 and extends from the upper surface of the cam member 108, and the lower cam ramp protrusion 174 is on a proximal end of the first cam protrusion 170 and extends from the upper surface of the cam member 108. In the illustrated embodiment, the upper and lower cam ramp protrusions 172 and 174 substantially correspond in shape to the upper and lower cam follower ramps 156 and 158 such that the upper and lower cam ramp protrusions 172 and 174 have a generally helical shape.

The first and second cam protrusions 170 and 171 of the cam member 108 interface with the upper and lower cam follower ramps 156 and 158 of the cam follower assembly 106 to convert the oscillating motion of the cam member 108 to reciprocating motion of the cam follower assembly 106. In this regard, the upper and lower cam follower ramps 156 and 158 of the first cam follower 150 are configured to abut the upper cam ramp protrusion 172 and the lower cam ramp protrusion 174, respectively, of the first cam protrusion 170. As discussed above, the upper and lower cam ramp protrusions 172 and 174 define upper and lower cam profile surface and the upper and lower cam follower ramps 156 and 158 define cam follower surfaces. As described above, the upper and lower cam follower ramps 156 and 158 and the upper and lower cam ramp protrusions 172 and 174 are in the shape of a helix in the illustrated embodiment. As a result, if the cam follower assembly 106 is not allowed to rotate about the central axis A1, the rotation of the cam member 108 causes the cam follower assembly 106 to raise and lower in the direction of the central axis A1, thereby creating orthogonal reciprocating motion from oscillating motion.

In some embodiments, a single cam follower 150 and a single cam protrusion 170 is used to convert the oscillating motion of the oscillating hub 110 to reciprocating motion. In such embodiments with a single cam follower 150 and a single cam protrusion 170, other features may be required to stabilize the cam follower assembly 106, such as a spring or a sliding dowel (not shown). In other embodiments, two or more upper and lower cam follower ramps 156 and 158 are included on a single cam follower 150.

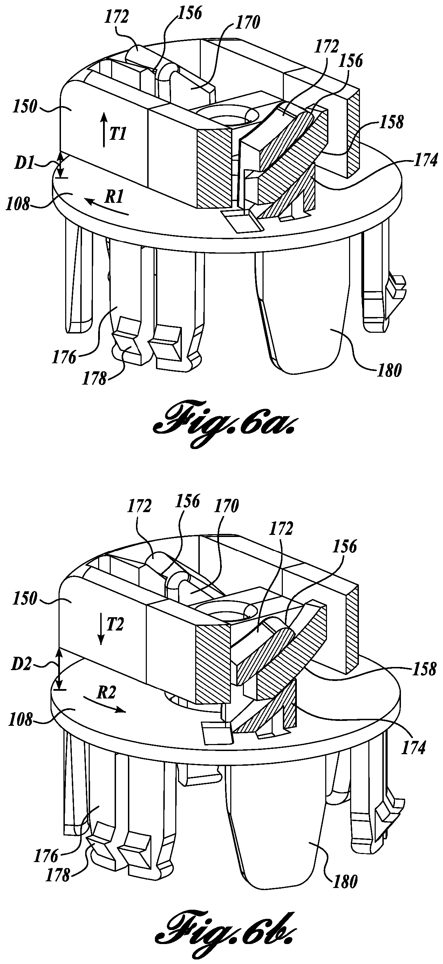

Turning to FIGURES 6a and 6b, the conversion of the oscillating motion of the cam member 108 to orthogonal reciprocating motion of the cam follower assembly 106 is shown in greater detail. As shown in an initial relative clocked position in FIGURE 6a, the cam follower assembly 106 and the cam member 108 are at a distance D1 apart (with the distance D1 defined along the central axis A1). The upper and lower cam follower ramps 156 and 158 interface the upper and lower cam ramp protrusions 172 and 174 in a sliding manner. Having the helical shape described above, as the upper and lower cam follower ramps 156 and 158 slide with respect to the upper and lower cam ramp protrusions 172 and 174, the upper and lower cam follower ramps 156 and 158 are positioned either higher or lower on the helix of the upper and lower cam ramp protrusions 172 and 174, resulting in translation of the cam follower assembly 106 along the central axis A1.

In some embodiments, the upper and lower cam follower ramps 156 and 158 closely correspond to the cam protrusion 170 such that the upper and lower cam follower ramps 156 and 158 abut the upper and lower cam ramp protrusions 172 and 174. In other embodiments, an amount of axial play is introduced such that only one of the upper and lower cam follower ramps 156 and 158 abut the corresponding upper and lower cam ramp protrusions 172 and 174 during reciprocating motion. In this regard, inertia of the cam follower assembly 106 may cause the upper cam follower ramp 156 to abut the upper cam ramp protrusion 172 during a retracting reciprocating movement (opposite direction of T1), and cause the lower cam follower ramp 158 to abut the lower cam ramp protrusion 174 during an extending reciprocating movement (in the direction of T1).

As shown in the transition from FIGURE 6a to FIGURE 6b, as the cam member 108 rotates about the central axis A1 in the direction of rotation R1, the cam follower assembly 106 translates away from the cam member 108 in the direction of translation T1 from a distance D1 to a distance D2 (see FIGURE 6b). The interaction of the upper and lower cam follower ramps 156 and 158 with the upper and lower cam ramp protrusions 172 and 174, respectively (with the cam follower assembly 106 restricted from rotating), causes the oscillating motion of the cam member 108 to convert to orthogonal reciprocal motion in the cam follower assembly 106. With the cam follower assembly 106 reciprocating, the infuser tip anchor 152 and subsequently to the infuser tip 102, also necessarily reciprocate.

It can be appreciated that as the cam member 108 oscillates, it changes direction of rotation from the direction R1 to a direction R2 that is opposite R1. Thus, although not generally shown in the FIGURES, when the cam member 108 rotates in the direction of rotation R2, the cam follower assembly 106 translates toward the cam member 108 in the direction of translation T2. The repeating pattern of the cam member 108 oscillating between the directions of rotation R1 and R2 causes the cam follower assembly 106 to reciprocate between the directions of translation T1 and T2.

As explained above, the cam follower assembly 106 exhibits an orthogonal reciprocating motion based on an oscillation from the cam member 108. To accomplish the conversion of motion, the cam member 108 interfaces the oscillating hub 110 which interfaces an oscillating motor (not shown) within the personal care appliance H. The oscillating hub 110 transfers the oscillating motion of the motor to the cam member 108. In this regard, the oscillating hub 110 includes a cam member positioning protrusion 190 configured to interface the cam member 108 and positively transfer the oscillating motion to the cam member 108.

As shown in FIGURE 2, the cam member positioning protrusion 190 is positionable between a hub positioning tab 180 and an outer housing locking tab 176 extending from a lower surface of the cam member 108. The outer housing locking tab 176 is defined by an elongated member extending from the lower surface of the cam member 108, and at least one locking notch (not labeled) defined on its distal end. The locking notch is configured to interlock with the cam member positioning protrusion 190 to removably couple the cam member 108 to the oscillating hub 110. In other embodiments, an interlock feature is not required to couple the cam member 108 to the oscillating hub 110 as the body locking slots 140 of the outer housing assembly 104 couple the cam driven converter assembly 100 to the personal care appliance H.

In some embodiments, the cam driven converter assembly 100 is assembled prior to the coupling of the cup 130 to the outer housing 136. In this regard, the first and second cam followers 150 and 151 are suitably coupled together to surround the infuser tip anchoring post 154 within the infuser tip anchor aperture 164. During coupling of the first and second cam followers 150 and 151, the first and second cam protrusions 170 and 171 are interfaced such that the features moveably interlock the cam follower assembly 106 to the cam member 108. In this regard, the freedom of movement between the cam follower assembly 106 and the cam member 108 is limited to the sliding interaction of the upper and lower cam follower ramps 156 and 158 and the upper and lower cam ramp protrusions 172 and 174.

When interfaced, the cam follower assembly 106 and the cam member 108 are inserted into the outer housing 136 from a forward side (i.e., the side of the outer housing 104 with the outer housing welding surface 142). During the insertion, each outer housing clocking slot protrusion 166 is aligned with a corresponding cam follower clocking slot 138 of the outer housing 136. The interfaced cam follower assembly 106 and cam member 108 are inserted into the outer housing 136 until an outer housing locking protrusion 178 of the outer housing locking tab 176 extends radially outward and interfaces the outer housing 136. In this manner, the interfaced cam follower assembly 106 and cam member 108 are prevented from exiting the forward side of outer housing without deflection of the outer housing locking tab 176.

To complete the outer housing assembly 104, the cup 130 is coupled to the outer housing 136 using any suitable method described above. The coupling of the cup 130 prevents removal of the interfaced cam follower assembly 106 and cam member 108 from the forward side of the outer housing 136. Likewise, features of the outer housing 136 and the cam follower assembly 106, such as the cam follower clocking slots 138 and the outer housing clocking slot protrusions 166 prevent removal of the interfaced cam follower assembly 106 and cam member 108 from the aft side of the outer housing 136. In this regard, as the cam driven converter assembly 100 is removed from the personal care appliance H, the cam member 108 separates from the oscillating hub 110 (which remains with the personal care appliance H). As a final aspect of the assembly, the infuser tip 102 is suitably inserted into the infuser tip opening 132 to interface and couple to the infuser tip anchor 152 of the infuser tip anchoring post 154.

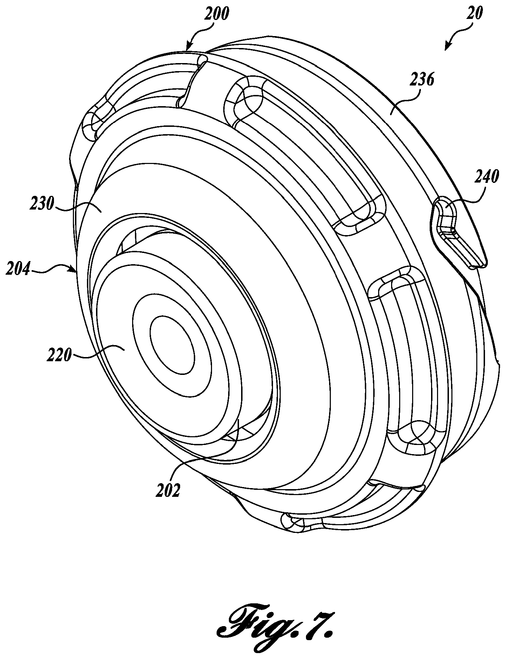

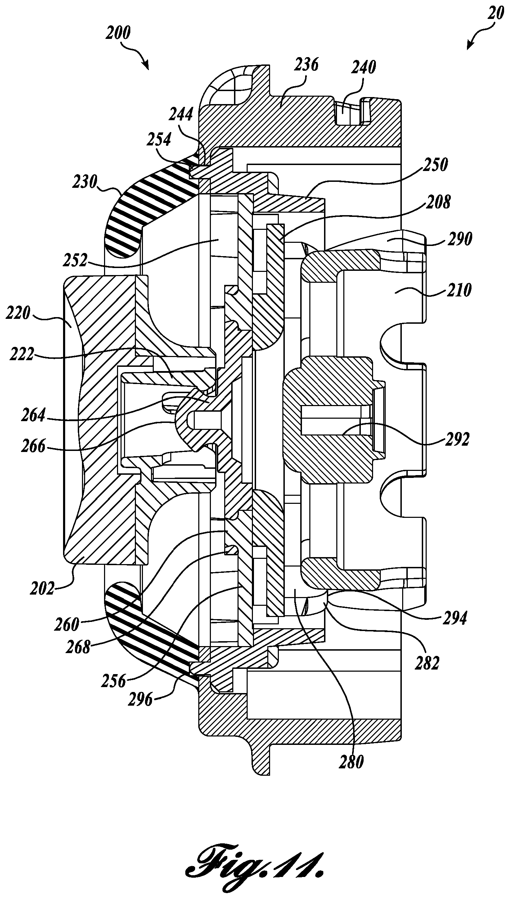

An exemplary converter assembly 200 of an appliance assembly 20 that is not encompassed by the claims now be described with reference to FIGURES 7-12. The converter assembly 200 includes various similarities to certain components of the cam driven converter assembly 100 of the appliance assembly 10 outlined above. It should be appreciated that certain of the alternative embodiments applicable to the cam driven converter assembly 100 are also applicable to the trampoline converter assembly 200.

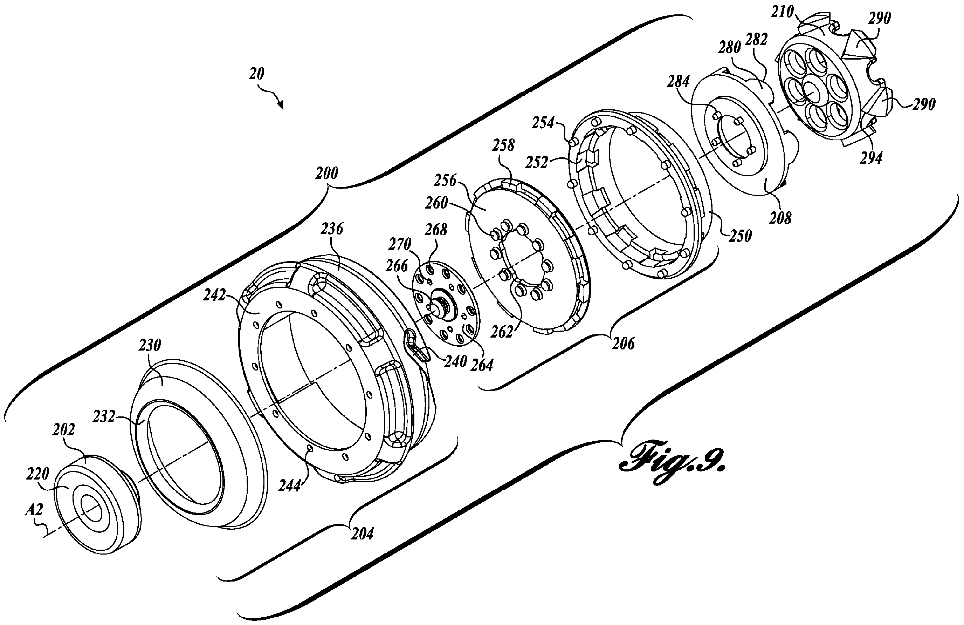

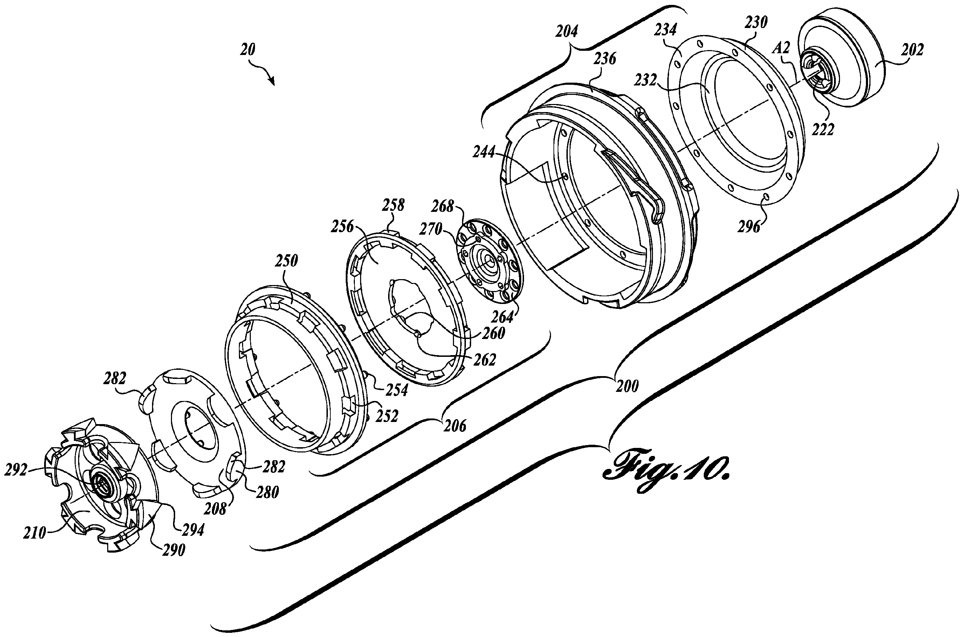

As shown in FIGURES 9 and 10, the converter assembly 200 generally includes an applicator tip, such as an infuser tip 202, removably coupled to a trampoline assembly 206 interfacing a follower member 208 movable by an oscillating hub 210 of a personal care appliance H, wherein oscillating motion of the follower member 208 causes reciprocating motion of the trampoline assembly 206 (and infuser tip 202). In this regard, the converter assembly 200 will be hereinafter referred to as a trampoline converter assembly 200. As used herein, the term "trampoline" refers to a flexible membrane used to provide a spring-like restorative force upon displacement.

In a similar manner to the cam driven converter assembly 100, the trampoline converter assembly 200 is operably attachable to the personal care appliance H by interfacing the oscillating hub 210. Like the cam driven converter assembly 100, the oscillating hub 210 of the appliance assembly 20 interfaces a shaft of an oscillating motor (not shown) within the personal care appliance H through a motor shaft slot 292 on the oscillating hub 210. In a manner well known in the art, the motor shaft is removably secured within the motor shaft slot 292 such that the rotation of the motor shaft oscillates the oscillating hub 210. Further description of the attachment of the trampoline converter assembly 200 to the oscillating hub 210 will be provided below.

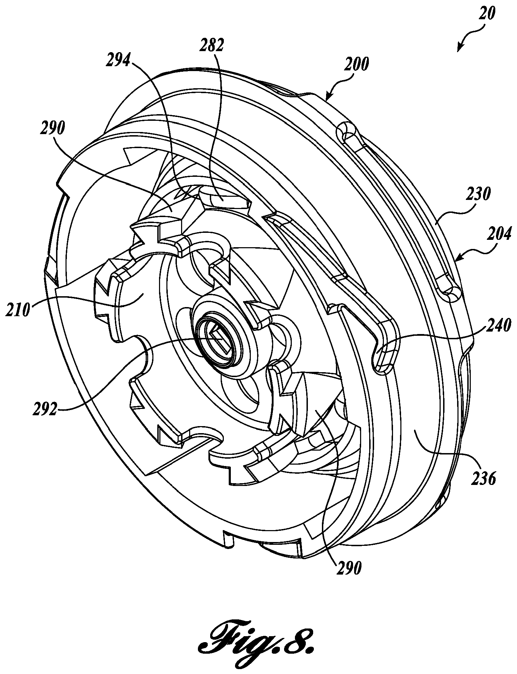

The trampoline converter assembly 200 is also removably attached to the personal care appliance H such that the trampoline converter assembly 200 may interface the oscillating hub 210. Like the cam driven converter assembly 100, the trampoline converter assembly 200 includes at least one body locking slot 240 in an outer housing assembly 204 that is configured to selectively interface a protrusion (not shown) on the personal care appliance H in a twisting interlock manner. In other embodiments, other attachment methods may be used to attach the trampoline converter assembly 200 to the personal care appliance H. As shown in FIGURE 8, the combination of the trampoline converter assembly 200 and the oscillating hub 210 is generally designated as an appliance assembly 20.

Differences in the infuser tip 202 from the infuser tip 102 will now be briefly described in detail. The infuser tip 202 is defined by a generally cylindrical body having an infusing surface 220 defined at one end of the body and an anchoring post locking tab 222 defined at the opposite end of the body (see FIGURES 9-11). Although similar in function and general height in the axial direction to the infuser tip 102, the infuser tip 202 has a differing aspect ratio such that it is larger in diameter than the infuser tip 102. Similar to the infuser tip 102, the infuser tip 202 is configured to be removably secured to the trampoline converter assembly 200 without the removal of the trampoline converter assembly 200 from the personal care appliance H. In this manner, a worn infuser tip 202 can be renewed without replacement of other components.

Differences in the outer housing assembly 204 from the outer housing assembly 104 will now be described in more detail. Similarly to the outer housing assembly 104, the outer housing assembly 204 is generally configured to enclose the trampoline converter assembly 200 (including the trampoline assembly 206 and the follower member 208) and the oscillating hub 210 and it provides safety such that the user does not inadvertently contact the moving components of the appliance assembly 20. Likewise, in the depicted example, the outer housing assembly 204 is manufactured from multiple components, including a cup 230 and an outer housing 236. However, in other examples and embodiments, the outer housing assembly 204 is suitably manufactured from a single component or from more than two components.

In the illustrated example, the cup 230 includes an infuser tip opening 232 that is larger than the infuser tip opening 132 of the cam driven converter assembly 100. In this regard, the infuser tip opening 232 is sized and configured to closely surround the infuser tip 202, while allowing reciprocating movement of the infuser tip 202 during use. The infuser tip opening 232 defines a central axis A2 running through the center of the trampoline assembly 206, the follower member 208, and the oscillating hub 210 as shown in FIGURES 9 and 10.

In examples and embodiments where the outer housing assembly 204 is manufactured from multiple components, they are suitably joined using a variety of coupling methods, including adhesive, welding, co-molding, fasteners, pins, or the like. In this regard, the cup 230 further includes a cup welding surface 234 configured to couple to an outer housing welding surface 242. In some embodiments, the cup welding surface 234 and the outer housing welding surface 242 provide a position for sonic welding, adhesive, fastener, or pin attachment. In contrast to the illustrated embodiment of the cup 130, the cup welding surface 234 may further include a trampoline assembly fixing aperture 296 to secure the cup 230 to the outer housing 236 and/or assist in securing a trampoline outer housing 250 to the outer housing assembly 204, as will be explained in greater detail below.

Referring specifically to FIGURES 9 and 10, the trampoline assembly 206 configured to enable reciprocating motion of the infuser tip 202 will now be described in detail. The trampoline assembly 206 includes a trampoline member 256 securable within the trampoline outer housing 250, and an infuser tip anchor 264 secured to the trampoline member 256. The trampoline member 256 is configured to flex to provide movement of the infuser tip anchor 264 (and the infuser tip 202) with respect to the outer housing assembly 204 in the direction of the central axis A2.

The infuser tip anchor 264 is secured to trampoline member 256 through interlocking co-molding features that will be described in more detail below. When secured to the trampoline member 256, the infuser tip anchor 264 is configured to removably secure the infuser tip 202 to the trampoline member 256 for movement of the infuser tip 202 with the trampoline member 256. In that regard, the infuser tip anchor 264 includes an upper surface and an infuser tip anchoring post 266 extending from the upper surface. The infuser tip anchoring post 266 removably couples the infuser tip 202 to the infuser tip anchor 264 in a manner similar to the connection between the infuser tip anchoring post 154 and the infuser tip 102.

Aspects of the coupling between the trampoline outer housing 250, the trampoline member 256, and the infuser tip anchor 264 to form the trampoline assembly 206 will now be described in more detail. To facilitate coupling of the components, the trampoline outer housing 250 includes at least one trampoline co-molding slot 252 extending axially along an interior portion of the outer housing 250 for co-molding interlocking at least one outer housing co-molding tab 258 extending radially from an outer edge of the trampoline member 256. Likewise, the infuser tip anchor 264 includes at least one trampoline co-molding aperture 268 through the body of the infuser tip anchor 264 for co-molding interlocking at least one infuser tip anchor co-molding post 260 extending from an upper surface of the trampoline member 256.

In some examples, the components of the trampoline assembly 206 are co-molded such that the trampoline assembly 206 is capable of elastic reciprocating motion with the follower member 208 (described in detail below) while being fixed within the rigid outer housing 250. In this manner, the trampoline assembly 206 provides a fixed mounting location for the infuser tip 202. In such co-molded embodiments, the trampoline outer housing 250, the trampoline member 256, and the infuser tip anchor 264 are formed in a molded combination as a single component.

As can be appreciated by one of ordinary skill, a co-molding process is one in which components manufactured from differing materials are molded to become interconnected while minimizing mixing of the materials to retain the separate material properties in each part of the co-molded component. For example, in some embodiments, the trampoline outer housing 250 and the infuser tip anchor 264 are manufactured from a rigid material (e.g., a plastic) while the trampoline member 256 is manufactured from an elastic material (e.g., a rubber). As stated above, in a standard co-molding process, the materials for each component do not mix; however, each component has features to permanently couple the components together as a result of the co-molding process.

Examples of such features are depicted in the illustrated examples. Specifically, and as described above, the trampoline co-molding slot 252 positioned in spaced, radial locations on the trampoline outer housing 250 interfaces with the outer housing co-molding tab 258 positioned in correspondingly spaced radial locations around the perimeter of the trampoline member 256 to form a co-molding coupling. In this regard, the outer housing co-molding tab 258 fills the trampoline co-molding slot 252 during the molding process to interlock the trampoline outer housing 250 and the trampoline member 256. Likewise, the infuser tip co-molding post 260 positioned on an upper surface of the trampoline member 256 interfaces with the trampoline co-molding aperture 268 positioned around the infuser tip anchor 264 to form a co-molding coupling. In this regard, the infuser tip co-molding post 260 fills the trampoline co-molding aperture 268 during the molding process to interlock the trampoline member 256 and the infuser tip anchor 264. To secure the trampoline member 256 to the infuser tip anchor 264, the infuser tip co-molding post 260 may suitably flare at one end distal to the trampoline member 256 to provide an interference lock with the trampoline co-molding aperture 268.

In other examples, coupling of the components of the trampoline assembly 206 is accomplished without co-molding, for example by using adhesives, fasteners, or pin and aperture features on the components. In further examples, the components of the trampoline assembly are manufactured from the same elastic material as a single member. In this regard, the infuser tip anchoring post 266 is suitably a separate material to provide structure for mounting of the infuser tip 202, or it is reinforced internally with a rigid component (not shown).

The infuser tip 202, when secured to the trampoline member 256 (through the infuser tip anchor 264), may move with the trampoline member 256 of the trampoline assembly 206 as it is reciprocated by the follower member 208. The trampoline assembly 206 is secured to the follower member 208 through the infuser tip anchor 264. In that regard, the manner in which the trampoline assembly 206 is coupled to the follower member 208 will now be described.

As can be seen by referring to FIGURE 9, the follower member 208 includes suitable structure for securing the follower member 208 to the infuser tip anchor 264. In the depicted example, the infuser tip anchor 264 includes at least one follower member fixing aperture 270 through the body of the infuser tip anchor 264 configured to receive at least one infuser tip fixing pin 284 of the follower member 208. In this regard, the interaction of the follower member fixing aperture 270 and the infuser tip fixing pin 284 is an interference fit such that the insertion of the infuser tip fixing pin 284 fixedly secures the follower member 208 to the infuser tip anchor 264. With the infuser tip fixing pin 284 received within the follower member fixing aperture 270, the follower member 208 is coupled to the infuser tip anchor 264. As such, the infuser tip anchor 264 moves with the follower member 208. Moreover, the follower member 208 is configured to translate in the direction of the central axis A2 independent of the trampoline outer housing 250 due to the flexing of the trampoline member 256. In some examples, the infuser tip anchor 264 may also include at least one follower pin clearance recess 262 correspondingly located to the follower member fixing aperture 270 and the infuser tip fixing pin 284 to provide clearance for the coupling of the follower member 208 to the infuser tip anchor 264.

The coupling of the trampoline assembly 206 to the outer housing assembly 204 will now be described in detail. The outer housing assembly 204 includes features to interface with components of the trampoline converter assembly 200. More specifically, at least one trampoline assembly fixing aperture 244 is provided on an upper annular flange (not labeled) of the outer housing 236 and is configured to receive at least one outer housing fixing pin 254 defined on an upper annular flange (not labeled) of the trampoline outer housing 250. During assembly, when the outer housing fixing pin 254 is pressed into the trampoline assembly fixing aperture 244, a coupling is created to secure the trampoline assembly 206 to the outer housing assembly 204. In some examples, the cup 230 includes at least one trampoline assembly fixing aperture 296 that is configured to also receive the outer housing fixing pin 254 of the trampoline outer housing 250. With the cup 230 coupled to the trampoline assembly 206 in this manner, enhanced coupling strength is defined between of the outer housing assembly 204 and the trampoline assembly 206.

The trampoline assembly 206 is coupled to the outer housing assembly 204 in the above-described manner, or in any other suitable manner, to allow the infuser tip anchor 264 to reciprocate relative to the outer housing assembly 204 along the central axis A2. The function of the trampoline assembly is comparable to the sliding motion enabled by the outer housing clocking slot protrusions 166 of the cam driven converter assembly 100. However, unlike the sliding motion of the cam follower assembly 106 with respect to the outer housing assembly 104, the reciprocating motion of the infuser tip anchor 264 is accomplished by elastic flexing of the trampoline member 256 allowing movement of the infuser tip anchor 264 in the direction of the central axis A2. In this regard, the trampoline outer housing 250 is fixedly coupled to the outer housing assembly 204, but the infuser tip anchor 264 is configured to reciprocate with respect to the outer housing assembly 204 based on input from the follower member 208.

Still referring to FIGURES 9 and 10, the aforementioned reciprocating motion of the infuser tip anchor 264 results from interaction of the follower member 208 with the oscillating hub 210. More specifically, the follower member 208 is configured to reciprocate along the central axis A2 when the oscillating hub 210 oscillates. In that regard, the interaction of the follower member 208 with the oscillating hub 210 will now be described in detail.

The follower member 208 includes a cam follower tab 280 having a cam follower profile surface 282 configured to interface a follower interface cam protrusion 290 of the oscillating hub 210. Any suitable cam profile surface and cam protrusion may be used to convert oscillating motion of the oscillating hub 210 to reciprocating motion of the follower member 208. In the illustrated example, the cam follower profile surface 282 is located on one end of the cam follower tab 280 distal to a lower surface of the follower member 208. The cam follower profile surface is arcuate such that the oscillation of the oscillating hub 210 causes the follower member 208 to translate in a reciprocating movement along the central axis A2. In other examples, the shape of the cam follower profile surface 282 is suitably adjusted to obtain the desired follower member 208 reciprocating motion profile.

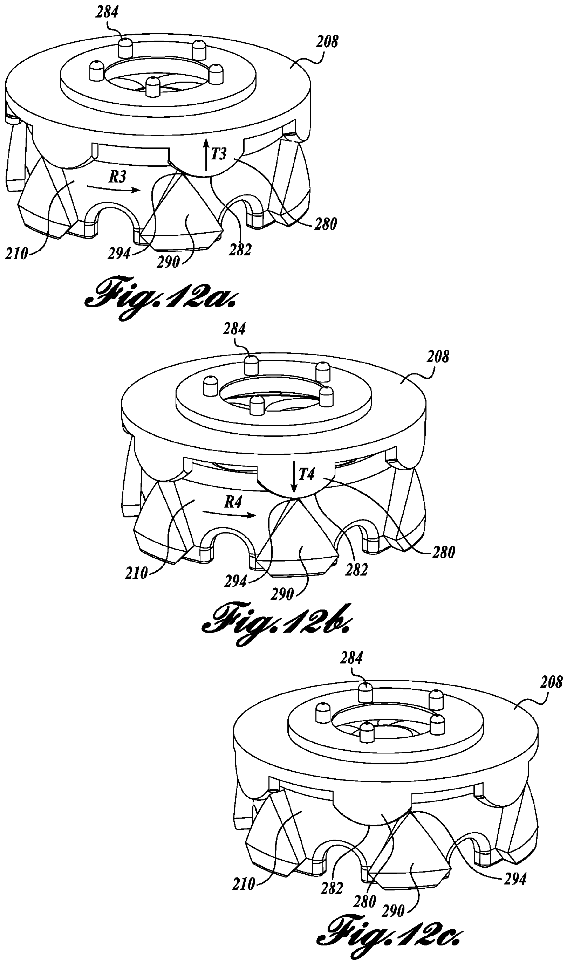

To convert oscillating motion of the oscillating hub 210 to reciprocating motion in the follower member 208, a cam input point 294 of the follower interface cam protrusion 290 slidingly abuts the cam follower profile surface 282 of the follower member 208. As can be seen in the interaction of the follower member 208 and the oscillating hub 210 in FIGURES 12a-12c, as the oscillating hub 210 oscillates, the cam input point 294 slides along the cam follower profile surface 282 to cause the follower member 208 to reciprocate along the central axis A2. As can be appreciated by one of ordinary skill, noise and material wear on the interacting surfaces during oscillation of the oscillating hub 210 can be reduced if the cam input point 294 is in constant contact with the cam follower profile surface 282. However, in other examples, the cam input point 294 interfaces the cam follower profile surface 282 intermittently.

To ensure the aforementioned constant contact of the cam input point 294 and the cam follower profile surface 282, during assembly of the trampoline converter assembly 200 to the personal care appliance H, the separation distance of the follower member 208 and the oscillating hub 210 is controlled. In this regard, the interaction of the cam input point 294 on the cam follower profile surface 282 at the position where the follower member 208 is closest to the oscillating hub 210 within the oscillation cycle causes at least a neutral flex in the trampoline member 256 (i.e. a position where the trampoline member 256 is not flexed). In some examples, a pre-flex is suitably introduced in the trampoline member 256 during assembly to the personal care appliance H such that the pre-flex creates an abutting bias between the cam input point 294 and the cam follower profile surface 282, tending to keep the abutting components in constant contact.

As described above, to enable reciprocating movement of the infuser tip 202 of the trampoline converter assembly 200, the trampoline member 256 must necessarily flex in relation to the outer housing assembly 204. In this regard, as the oscillating hub 210 oscillates, the follower member 208 translates away from the oscillating hub 210 in the direction along the central axis A2. As the follower member 208 translates, the trampoline member 256 flexes to allow movement of the infuser tip anchor 264 with respect to the outer housing assembly 204. In another aspect, the flex of the trampoline member 256 continues to provide a positive interaction of the cam input point 294 and the cam follower profile surface 282. In this regard, as described above, the trampoline member 256 acts as a biasing member to ensure abutment of the cam input point 294 and the cam follower profile surface 282 through the range of oscillation movement of the oscillating hub 210. Resultantly, as will be explained in greater detail below, with the follower member 208 limited to substantially linear movement along axis A2, the follower member 208 will reciprocate when interfacing with the oscillating hub 210.

Turning now to FIGURES 12a-12c, the conversion of the oscillating motion to orthogonal reciprocating motion is shown in greater detail. As will be appreciated, the elastic properties and shape of the trampoline member 256 tend to resist rotation motion or oscillation about the central axis A2, preventing a transfer of the oscillation from the oscillating hub 210 to the infuser tip 202. Resultantly, the rotation of the oscillating hub 210 causes the follower member 208 to translate in the direction of the central axis A2, thereby creating orthogonal reciprocating motion from oscillating motion.

As shown in an initial relative position in FIGURE 12a, the follower member 208 and the oscillating hub 210 are at a relative clocked position where the cam input point 294 is near a first end of the cam follower profile surface 282. As shown in the transition from FIGURE 12a to FIGURE 12b, as the oscillating hub 210 rotates about the central axis A2 in the direction of rotation R3, the follower member 208 translates away from the oscillating hub 210 in the direction of translation T3 along the central axis A2. The interaction of the cam input point 294 and the cam follower profile surface 282 (with the follower member 208 restricted from rotating), causes the oscillating motion of the oscillating hub 210 to convert to orthogonal reciprocal motion in the follower member 208. With the follower member 208 reciprocating, the infuser tip anchor 264, and subsequently to the infuser tip 202, also necessarily reciprocate.

As depicted in FIGURE 12b, the cam input point 294 is abutting the cam follower profile surface 282 at a substantially central point on the cam follower profile surface 282, representing the furthest extension of the follower member 208 from the oscillating hub 210 along the central axis A2.

Next, as shown in the transition from FIGURE 12b to FIGURE 12c, as the oscillating hub 210 continues to rotate in the direction of rotation R4, the cam input point 294 travels past a central point on the cam follower profile surface 282 and the follower member 208 translates back toward the oscillating hub 210 in the direction of translation T4. It can be appreciated that as the oscillating hub 210 oscillates, it changes direction of rotation from the direction R3 and R4 to a direction that is opposite R3 and R4. FIGURE 12c shows one representative clocking position of the transition of oscillation direction of the oscillating hub 210 from the direction of R4 to the opposite rotational direction about A2. The repeating pattern of the oscillating hub 210 oscillating between the directions of rotation causes the follower member 208 to reciprocate between the directions of translation T1 and T2.

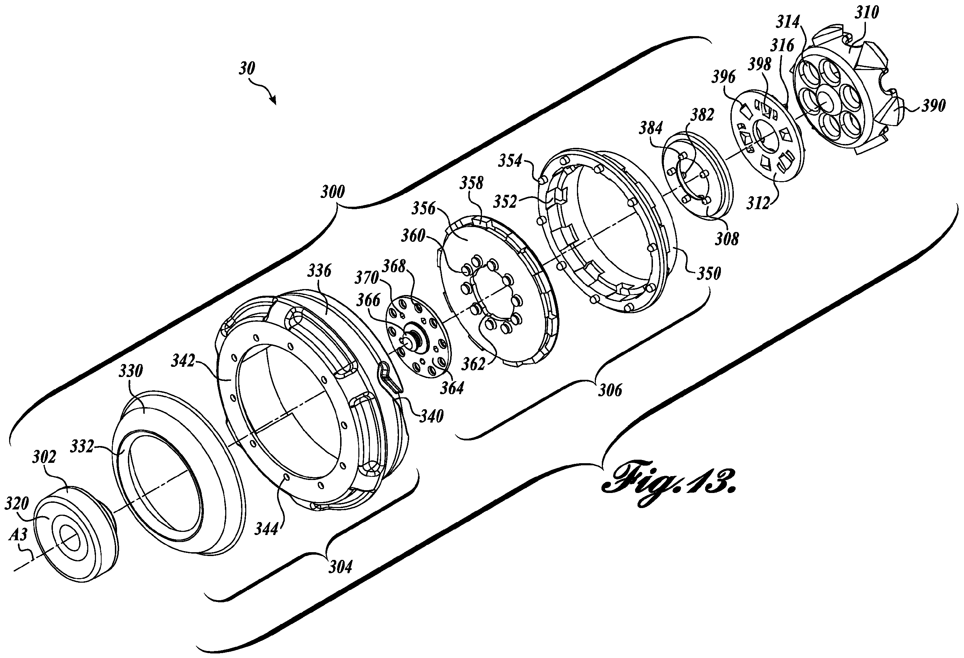

An exemplary converter assembly 300 of an appliance assembly 30 that is not encompassed by the claims now be described with reference to FIGURES 13-16. The converter assembly 300 includes various similarities to certain components of the trampoline converter assembly 200 of the appliance assembly 20 outlined above. For clarity in the ensuing descriptions, like elements have been designated with like numerals, but in the 300 series. It should be appreciated that certain of the alternative examples and embodiments applicable to the cam driven converter assembly 100 and the trampoline converter assembly 200 are also applicable to the trampoline converter assembly 300.

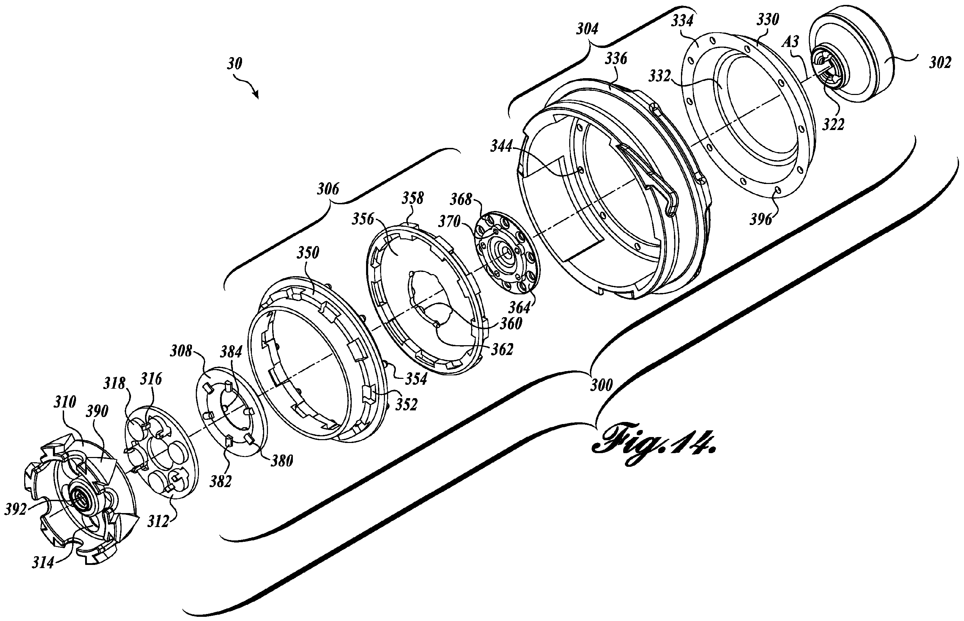

As shown in FIGURES 13-15, the trampoline converter assembly 300 has substantially similar components to the trampoline converter assembly 200, including an infuser tip 302 removably coupled to a trampoline assembly 306 interfacing a follower member 308 and surrounded by an outer housing assembly 304. Accordingly, the converter assembly 300 will be hereinafter referred to as a trampoline converter assembly 300. As shown in FIGURES 13 and 14, the combination of the trampoline converter assembly 300 and the oscillating hub 310 is generally designated as an appliance assembly 30.

Like the trampoline converter assembly 200, the trampoline converter assembly 300 interfaces an oscillating hub 310 and is removably attached to the of the personal care appliance H (FIGURE 1). However, in contrast to the trampoline converter assembly 200, the follower member 308 of the trampoline converter assembly 300 differs by including at least one cam follower protrusion 380 as opposed to a cam follower tab 280. Further, an additional component, an oscillating cam 312, is provided. For brevity in the ensuing description, only the differences between the trampoline converter assembly 200 and the trampoline converter assembly 300 will be described herein.

Differences in the follower member 308 from the follower member 208 will now be briefly described in detail. As shown most clearly in FIGURE 14, the cam follower protrusions 380 extend from a lower surface and are spaced radially around a center opening of the follower member 308, defining a central axis A3. Each cam follower protrusion 380 defines a curved cam follower profile surface 382 on a distal end, similar to the cam follower profile surface 282 described above. More specifically, in the depicted example, the cam follower profile surface 382 is generally semi-cylindrical and configured to interface a cam recess profile surface 398 of a cam recess 396 as described in detail below. In other examples, the cam follower profile surface 382 is any suitable shape to cause the follower member 308 to reciprocate at a desired reciprocating motion profile.

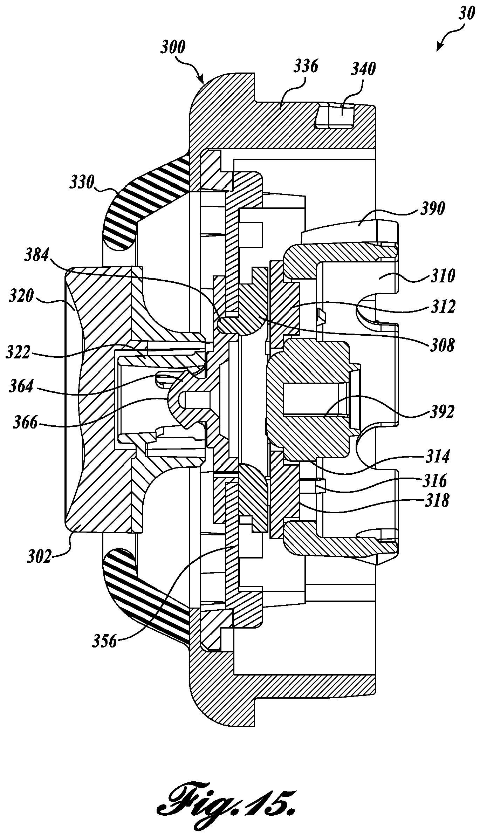

In contrast to the trampoline converter assembly 200, the trampoline converter assembly 300 includes an additional component, the oscillating cam 312, positioned between the oscillating hub 310 and the follower member 308. The oscillating cam 312 is removably securable to the oscillating hub 310 such that the oscillating cam 312 may oscillate with the oscillating hub 310. In that regard, the oscillating hub 310 includes at least one oscillating cam fixing aperture 314 for removably receiving an oscillating hub locking tab 316 extending from the distal end of an oscillating hub fixing protrusion 318 on the bottom surface of the oscillating cam 312. As shown most clearly in FIGURE 15, the oscillating hub fixing protrusion 318 corresponds in shape and size to the oscillating cam fixing apertures 314 to provide a mating connection between the oscillating cam 312 and the oscillating hub 310.

Further, the oscillating hub locking tab 316 is configured to removably couple the oscillating cam 312 and the oscillating hub 310 together. More specifically, the oscillating hub locking tab 316 passes through the oscillating cam fixing aperture 314, and a catching protrusion (not labeled) on a distal end of the oscillating hub locking tab 316 catches on the bottom surface of the oscillating hub 310. In some examples, the coupling of these components suitably occurs when the trampoline converter assembly 300 is combined with the personal care appliance H. However, in other examples, the oscillating cam 312 is coupled to the oscillating hub 310 prior to installation of the trampoline converter assembly 300 to the personal care appliance H.

The interaction of the follower member 308 and the oscillating cam 312 provides a similar conversion of oscillating motion to reciprocating motion as the follower member 208 and the oscillating hub 210 described in reference to the trampoline converter assembly 200 above. To carry out this function, the oscillating cam 312 includes at least one cam recess 396 defined on an upper surface of a body of the oscillating cam 312 that defines a cam recess profile 398. The cam recess 396 is defined to interface the cam follower profile surface 382 of the cam follower protrusions 380. In the illustrated example, the oscillating cam 312 includes a plurality of cam recesses 396 positioned radially about the body of the oscillating cam 312 correspondingly to the cam follower protrusions 380 of the follower member 308. Moreover, the cam recess profile 398 is defined by first and second opposing planar surfaces in the shape of a chevron. However, in other example, the cam recess profile surface 398 is suitably any shape for interfacing the cam follower profile surface 382 to accomplish the desired reciprocating motion profile.

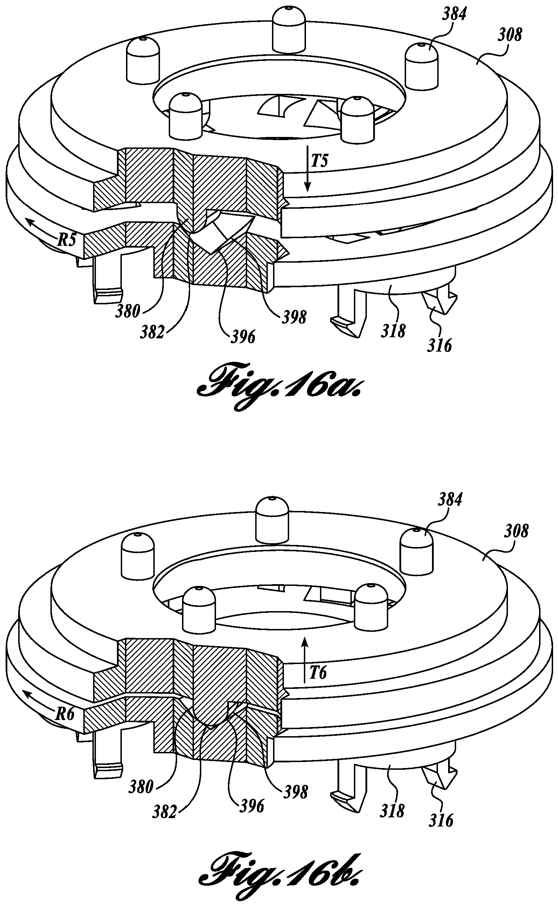

Turning to FIGURES 16a and 16b, the conversion of the oscillating motion to orthogonal reciprocating motion for the trampoline converter assembly 300 will now be described in greater detail. As will be appreciated, the elastic properties and shape of the trampoline member 356 tend to resist rotation motion or oscillation about the central axis A3, preventing a transfer of the oscillation from the oscillating hub 310 to the infuser tip 302. Resultantly, the rotation of the oscillating hub 310 and the oscillating cam 312 causes the follower member 308 to translate in the direction of the central axis A3, thereby creating orthogonal reciprocating motion from oscillating motion.

As shown in an initial relative position in FIGURE 16a, the follower member 308 and the oscillating cam 312 are at a relative clocked position where the cam follower protrusion 380 is near one side of the cam recess 396. As shown in the transition from FIGURE 16a to FIGURE 16b, as the oscillating cam 312 rotates about the central axis A3 in the direction of rotation R5, the follower member 308 translates toward the oscillating cam 312 in the direction of translation T5 along the central axis A3. The interaction of the cam follower profile surface 382 and the cam recess profile surface 398 (with the follower member 308 restricted from rotating about the central axis A3), causes the oscillating motion of the oscillating cam 312 to convert to orthogonal reciprocal motion in the follower member 308. With the follower member 308 reciprocating, the infuser tip anchor 364, and subsequently to the infuser tip 302, also necessarily reciprocate.

As the oscillating cam 312 continues rotation in the direction of rotation R6, the cam follower protrusion 380 travels past a central point on the cam recess 396. The cam follower protrusion 380 travels upwardly toward the second side of the cam recess 396, and in response, the follower member 308 translates away from the oscillating cam 312 in the direction of translation T6. It can be appreciated that as the oscillating hub 310 and the oscillating cam 312 oscillate, they change direction of rotation from the direction R5 and R6 to a direction that is opposite R5 and R6. The repeating pattern of the oscillating hub 310 oscillating between the directions of rotation causes the follower member 308 to reciprocate between the directions of translation T5 and T6 along the central axis A3.

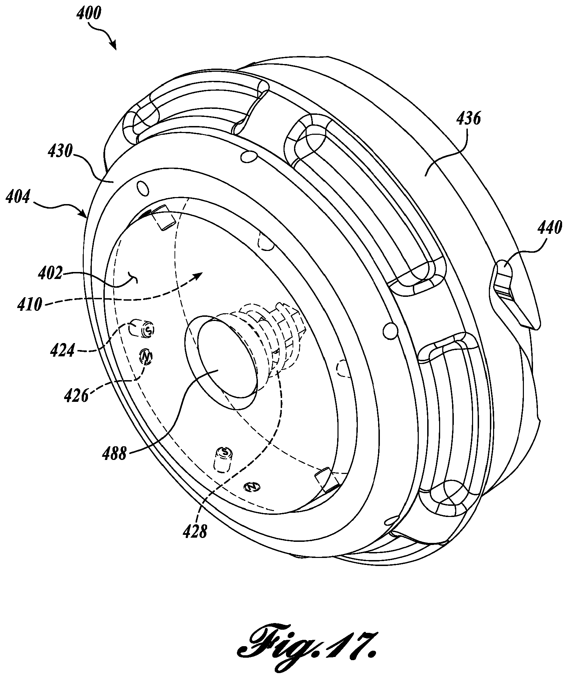

Turning to FIGURES 17-21, alternate examples of converter assemblies 400, 500, 600, 700, and 800 are depicted and will now be described in detail. Certain components of the converter assemblies 400, 500, 600, 700, and 800 are substantially similar to the converter assemblies 100, 200, and 300 as outlined above, and as such, shared components have not been shown in detail in the FIGURES. Accordingly, each converter assembly shown in FIGURES 17-21 includes an outer housing assembly 404, 504, 604, 704, and 804, consisting of a cup 430, 530, 630, 730, and 830, and an outer housing 436, 536, 636, 736, and 836. Each outer housing 436, 536, 636, 736, and 836 has a body locking slot 440, 540, 640, 740, and 840 for attaching the converter assemblies 400, 500, 600, 700, and 800 to a personal care appliance H (FIGURE 1).

The converter assemblies 400, 500, 600, 700, and 800 further include an infuser tip surface member 402, 502, 602, 702, and 802 for mounting of an infuser tip, such as infuser tip 102, 202, or 302. The infuser tip surface member 402, 502, 602, 702, and 802 is elastically coupled to an oscillating hub 410, 510, 610, 710, and 810 to provide the input oscillating motion, which is subsequently converted at least partially to reciprocating motion at the infuser tip surface member 402, 502, 602, 702, and 802 through various configurations explained in greater detail below. The infuser tip is not shown in FIGURES 17-21 for clarity. Differences in the alternate examples of FIGURES 17-21 will now be described in detail.

Referring to the alternate example of FIGURE 17, a magnetic converter assembly 400 is provided. The magnetic converter assembly 400 includes the infuser tip surface member 402 elastically coupled to the oscillating hub 410. The infuser tip surface member 402 is centered and retained in the outer housing assembly 404 by a mounting post 488 connected to the oscillating hub 410. In some examples, the elastic coupling is a biasing member, such as an infuser tip surface member spring 428. In other examples, the elastic coupling includes one or more biasing members such as a spring, a magnet, a deflecting post, or the like.

As shown in the illustrated example, the infuser tip surface member 402 includes an embedded infuser tip surface member magnet 424 corresponding to an outer housing magnet 426 of the outer housing 436. The infuser tip surface member magnet 424 and the outer housing magnet 426 are configured with opposing magnetic polarity and positioned in proximity to each other such that a repulsion force is present at certain rotational positions of the infuser tip surface member 402. In this regard, as the oscillating hub 410 rotates, the repulsion force of the magnets 424 and 426 provide force to compress the infuser tip surface member spring 428 and retract the infuser tip surface member 402 within the outer housing assembly 404. As a result, as the oscillating hub 410 oscillates, the infuser tip surface member 402 reciprocates with respect to the oscillating hub 410 and outer housing assembly 404. In this embodiment, the infuser tip surface member 402 may exhibit both oscillating and reciprocating motion simultaneously.

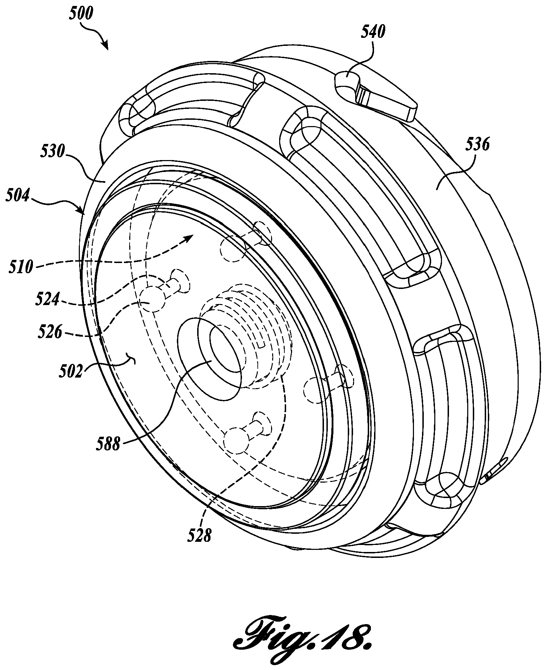

Now referring to the alternate example of FIGURE 18, a post converter assembly 500 is provided. The post converter assembly 500 includes the infuser tip surface member 502 elastically coupled to the oscillating hub 510. The infuser tip surface member 502 is centered in the housing by a mounting post 588 connected to the oscillating hub 510. In the illustrated example, the elastic coupling is a deflecting post 524 having a deflecting post end 526 near the infuser tip surface member 502. As shown in the illustrated example, the infuser tip surface member 502 includes a plurality of deflecting posts 524 coupled to the oscillating hub 510. The deflecting post 524 is configured to deflect such that the infuser tip surface member 502 and the oscillating hub 510 are positioned closer together during deflection of the deflecting post 524. In this regard, as the oscillating hub 510 rotates and then changes direction, the rotational inertia of the infuser tip mounting member 502 causes the infuser tip mounting member 502 to continue to rotate in the opposite direction of the oscillating hub 510 and deflect the deflection post 524, thereby compressing the infuser tip surface member spring 528 and retracting the infuser tip surface member 502 within the outer housing assembly 504. As a result, as the oscillating hub 510 oscillates, the infuser tip surface member 502 reciprocates with respect to the oscillating hub 510 and outer housing assembly 504. In this example, the infuser tip surface member 502 may exhibit both oscillating and reciprocating motion simultaneously.

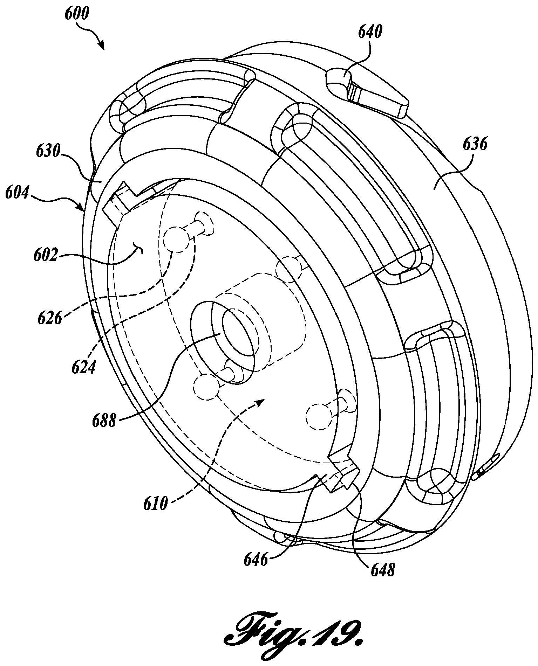

Now referring to the alternate example of FIGURE 19, a post and slot converter assembly 600 is provided. The post and slot converter assembly 600 is substantially similar to the post converter assembly 500 except the infuser tip surface member spring 528 is omitted and an infuser tip surface member protrusion 646 and an outer housing slot 648 are included. As shown in the illustrated example, the infuser tip surface member 602 includes a plurality of deflecting posts 624 coupled to the oscillating hub 610, and the infuser tip surface member protrusion 646. The outer housing 636 includes the outer housing slot 648 configured to interface the infuser tip surface member protrusion 646 to allow only translational movement of the infuser tip surface member 602 with respect to the outer housing assembly 604. The deflecting post 624 is configured to deflect such that the infuser tip surface member 602 and the oscillating hub 610 are positioned closer together during deflection of the deflecting post 624. In this regard, as the oscillating hub 610 rotates, the infuser tip surface member protrusion 646 prevents rotation of the infuser tip mounting member 602 and causes the infuser tip mounting member 602 to remain stationary relative to the oscillating hub 610 and deflect the deflection post 624, thereby retracting the infuser tip surface member 602 within the outer housing assembly 604. As a result, as the oscillating hub 610 oscillates, the infuser tip surface member 602 reciprocates with respect to the oscillating hub 610 and outer housing assembly 604.

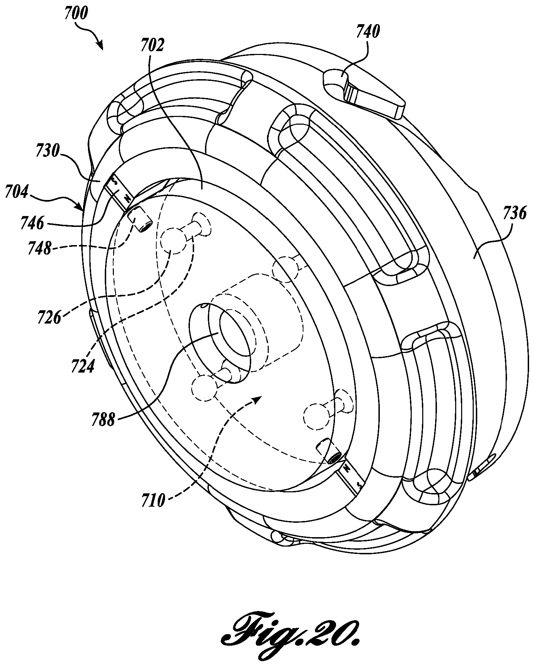

Now referring to the alternate example of FIGURE 20, a post and magnet converter assembly 700 is provided. The post and magnet converter assembly 700 is substantially similar to the post and slot converter assembly 600 except the function of the infuser tip surface member protrusion 646 and the outer housing slot 648 is performed with a magnetic force by an infuser tip surface member slug 748 and an outer housing magnet 746. As shown in the illustrated example, the infuser tip surface member 702 includes a plurality of deflecting posts 724 coupled to the oscillating hub 710, and the infuser tip surface member slug 748. In some examples, the infuser tip surface member slug 748 is manufactured from a ferrous material such that it possesses a magnetic attraction force to the outer housing magnet 746 when in close proximity. The outer housing 736 includes the outer housing magnet 746 configured to provide the magnetic attraction force to the infuser tip surface member slug 748 to allow only translational movement of the infuser tip surface member 702 with respect to the outer housing assembly 704. The deflecting post 724 is configured to deflect such that the infuser tip surface member 702 and the oscillating hub 710 are positioned closer together during deflection of the deflecting post 724. In this regard, as the oscillating hub 710 rotates, the magnetic attraction force between the infuser tip surface member slug 748 and the outer housing magnet 746 prevents rotation of the infuser tip mounting member 702 and causes the infuser tip mounting member 702 to remain rotationally stationary relative to the oscillating hub 710 and deflect the deflection post 724, thereby retracting the infuser tip surface member 702 within the outer housing assembly 704. As a result, as the oscillating hub 710 oscillates, the infuser tip surface member 702 reciprocates with respect to the oscillating hub 710 and outer housing assembly 704.

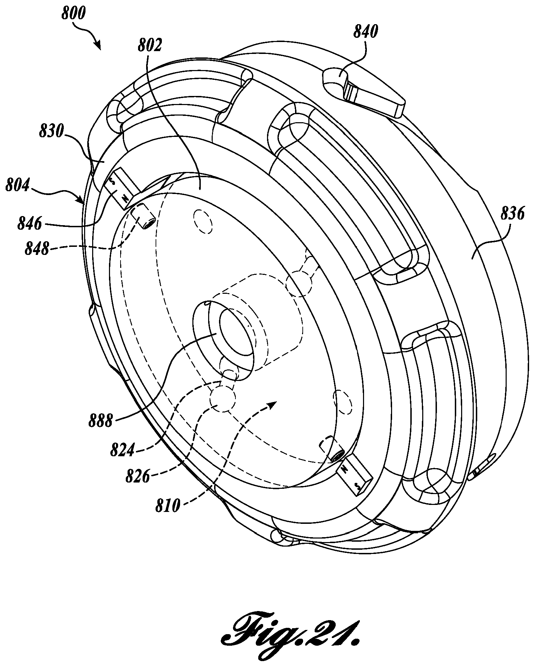

Now referring to the alternate example of FIGURE 21, a wobble converter assembly 800 is provided. The wobble converter assembly 800 is substantially similar to the post and magnet converter assembly 700 except the configuration of the deflecting post 824. As shown in the illustrated example, the infuser tip surface member 802 includes a plurality of deflecting posts 824 mounted in a biased configuration such that the deflection posts 824 are not normal to the direction of translation of the infuser tip surface member 802. The deflection posts 824 are coupled to the oscillating hub 810 and the infuser tip surface member slug 848. The outer housing 836 includes the outer housing magnet 846 configured to provide the magnetic attraction force to the infuser tip surface member slug 848 to allow only translational movement of the infuser tip surface member 802 with respect to the outer housing assembly 804. The deflecting post 824 is configured to deflect such that the infuser tip surface member 802 and the oscillating hub 810 are positioned closer together during deflection of the deflecting post 824.

As the oscillating hub 810 rotates, the magnetic attraction force between the infuser tip surface member slug 848 and the outer housing magnet 846 prevents rotation of the infuser tip mounting member 802 and causes the infuser tip mounting member 802 to remain rotationally stationary relative to the oscillating hub 810 and deflect the deflection post 824. However, the biased configuration causes a first deflecting post 824 to extend while a second deflecting post 824 deflects further. This biased configuration may cause the infuser tip surface member 802 to tilt at an angle while translating with respect to the outer housing assembly 804. As a result, as the oscillating hub 810 oscillates, the infuser tip surface member 802 changes angle and reciprocates with respect to the oscillating hub 810 and outer housing assembly 804. In this example, the infuser tip surface member 802 exhibits non-orthogonal reciprocating motion.

The detailed description set forth above in connection with the appended drawings, where like numerals reference like elements, are intended as a description of various embodiments of the present disclosure and are not intended to represent the only embodiments. Each embodiment described in this disclosure is provided merely as an example or illustration and should not be construed as preferred or advantageous over other embodiments. The illustrative examples provided herein are not intended to be exhaustive or to limit the disclosure to the precise forms disclosed.

In the foregoing description, specific details are set forth to provide a thorough understanding of exemplary embodiments of the present disclosure. It will be apparent to one skilled in the art, however, that the embodiments disclosed herein may be practiced without embodying all of the specific details. In some instances, well-known process steps have not been described in detail in order not to unnecessarily obscure various aspects of the present disclosure. Further, it will be appreciated that embodiments of the present disclosure may employ any combination of features described herein.

The present application may include references to directions, such as "forward," "rearward," "front," "back," "upward," "downward," "right hand," "left hand," "lateral," "medial," "in," "out," "extended," "advanced," "retracted," "proximal," "distal," "central," etc. These references, and other similar references in the present application, are only to assist in helping describe and understand the particular embodiment and are not intended to limit the present disclosure to these directions or locations.

The present application may also reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about," "approximately," etc., mean plus or minus 5% of the stated value.

The principles, representative embodiments, and modes of operation of the present disclosure have been described in the foregoing description. However, aspects of the present disclosure, which are intended to be protected, are not to be construed as limited to the particular embodiments disclosed. Further, the embodiments described herein are to be regarded as illustrative rather than restrictive. It will be appreciated that variations and changes may be made by others, and equivalents employed, without departing from the spirit of the present disclosure.

## Claims

1. A converter assembly (100) for converting oscillating motion to orthogonal reciprocating motion, the converter assembly (100) comprising:
an outer housing (104) having a central axis;
a first cam follower (150) movably associated with the outer housing (104) and configured for reciprocating motion along the central axis, the first cam follower (150) including an upper cam follower ramp (156) disposed on a first side of the first cam follower (150) and a lower cam follower ramp (158) disposed on an opposite second side of the first cam follower (150);
a second cam follower (151) movably associated with the outer housing (104) and configured for reciprocating motion along the central axis (Al), the second cam follower (151) including an upper cam follower ramp (156) disposed on a first side of the second cam follower (151) and a lower cam follower ramp (158) disposed on an opposite second side of the second cam follower (151);
a cam rotatably couplable to the outer housing (104) and configured for oscillating motion about the central axis with respect to the outer housing (104); and
a first cam protrusion (170) and a second cam protrusion (171), each extending from a first side of the cam and being configured to interface with the upper cam follower ramp (156) and the lower cam follower ramp (158) of the first cam follower (150) and the second cam follower (151), respectively; and
wherein the interaction of the first cam follower (150) with the first cam protrusion (170) and the interaction of the second cam follower (151) with the second cam protrusion (171) causes the follower to reciprocate along the central axis (A1) when the cam oscillates about the central axis (A1).

2. The converter assembly (100) of Claim 1, wherein the outer housing (104) includes an aperture configured to receive an applicator tip.

3. The converter assembly (100) of Claim 2, wherein the follower further includes an applicator tip mounting portion.

4. The converter assembly (100) of Claim 3, wherein the applicator tip is couplable to the applicator tip mounting portion.

5. The converter assembly (100) of Claim 4, wherein the applicator tip is an infuser tip (102).

6. The converter assembly (100) of Claim 1, wherein the cam further comprises a cam profile surface positioned to interface the cam following surface, and wherein the cam profile surface is a helix.

7. The converter assembly (100) of Claim 1, wherein the converter assembly (100) is couplable to a personal care appliance handle through the outer housing (104).

8. The converter assembly (100) of Claim 7, wherein the cam is configured to interface an oscillating hub (110) of the personal care appliance (H) such that the oscillating motion of the oscillating hub (110) is transferred to oscillating motion of the cam.

9. The converter assembly (100) of Claim 1, wherein the follower is movably associated with the outer housing (104) by an elastic coupling.

10. The converter assembly (100) of Claim 9, wherein the cam further comprises a point configured to interface the cam following surface and cause the follower to reciprocate along the central axis.

11. The converter assembly (100) of Claim 10, wherein the cam following surface is arcuate.

12. The converter assembly (100) of Claim 9, wherein the cam comprises a recess (396) with a cam recess profile surface (398), wherein the cam follower surface closely interacts with the cam recess profile surface (398) to cause the follower to reciprocate along the central axis.

13. The converter assembly (100) of Claim 1, further comprising:
the outer housing (104) having one of a slot aligned with the central axis and a protrusion; and
the follower having the other of the slot aligned with the central axis and the protrusion, wherein the protrusion is slidably receivable within the slot to restrict movement of the follower to reciprocating motion along the central axis.

14. The converter assembly (100) of Claim 1, further comprising:
the follower elastically coupled to the outer housing (104) and configured for reciprocating motion along the central axis; and
a contact point configured to slidingly interface the following surface and exhibit oscillating motion about the central axis with respect to the outer housing (104), wherein the sliding interface of the contact point and the following surface causes the follower to reciprocate along the central axis when the contact point oscillates about the central axis.

## Patentansprüche

1. Wandleranordnung (100) zur Umwandlung einer oszillierenden Bewegung in eine orthogonale hin- und hergehende Bewegung, wobei die Wandleranordnung (100) umfasst:
ein äußeres Gehäuse (104) mit einer Mittelachse;
einen ersten Nockenstößel (150), der bewegbar dem äußeren Gehäuse (104) zugeordnet und für eine hin- und hergehende Bewegung entlang der Mittelachse ausgestaltet ist, wobei der erste Nockenstößel (150) eine obere Nockenstößelflanke (156), die auf einer ersten Seite des ersten Nockenstößels (150) angeordnet ist, und eine untere Nockenstößelflanke (158), die auf einer gegenüberliegenden zweiten Seite des ersten Nockenstößels (150) angeordnet ist, umfasst;
einen zweiten Nockenstößel (151), der bewegbar dem äußeren Gehäuse (104) zugeordnet und für eine hin- und hergehende Bewegung entlang der Mittelachse (A1) ausgestaltet ist, wobei der zweite Nockenstößel (151) eine obere Nockenstößelflanke (156), die auf einer ersten Seite des zweiten Nockenstößels (151) angeordnet ist, und eine untere Nockenstößelflanke (158), die auf einer gegenüberliegenden zweiten Seite des zweiten Nockenstößels (151) angeordnet ist, umfasst;
einen Nocken, der drehbar mit dem äußeren Gehäuse (104) koppelbar und für eine oszillierende Bewegung um die Mittelachse in Bezug auf das äußere Gehäuse (104) ausgestaltet ist; und
einen ersten Nockenvorsprung (170) und einen zweiten Nockenvorsprung (171), die sich jeweils von einer ersten Seite des Nockens aus erstrecken und dazu ausgestaltet sind, entsprechend mit der oberen Nockenstößelflanke (156) und der unteren Nockenstößelflanke (158) des ersten Nockenstößels (150) und des zweiten Nockenstößels (151) zusammenzuwirken; und
wobei das Zusammenwirken des ersten Nockenstößels (150) mit dem ersten Nockenvorsprung (170) und das Zusammenwirken des zweiten Nockenstößels (151) mit dem zweiten Nockenvorsprung (171) bewirkt, dass der Stößel entlang der Mittelachse (A1) hin- und hergeht, wenn der Nocken um die Mittelachse (A1) oszilliert.

2. Wandleranordnung (100) nach Anspruch 1, wobei das äußere Gehäuse (104) eine Öffnung umfasst, die dazu ausgestaltet ist, eine Applikatorspitze aufzunehmen.

3. Wandleranordnung (100) nach Anspruch 2, wobei der Stößel ferner einen Applikatorspitzenbefestigungsabschnitt umfasst.

4. Wandleranordnung (100) nach Anspruch 3, wobei die Applikatorspitze mit dem Applikatorspitzenbefestigungsabschnitt koppelbar ist.

5. Wandleranordnung (100) nach Anspruch 4, wobei die Applikatorspitze eine Infusorspitze (102) ist.

6. Wandleranordnung (100) nach Anspruch 1, wobei der Nocken ferner eine Nockenprofilfläche umfasst, die dazu angeordnet ist, mit der Nockenstößelfläche zusammenzuwirken, und wobei die Nockenprofilfläche eine Spirale ist.

7. Wandleranordnung (100) nach Anspruch 1, wobei die Wandleranordnung (100) über das äußere Gehäuse (104) mit einem Griff eines Körperpflegegeräts koppelbar ist.

8. Wandleranordnung (100) nach Anspruch 7, wobei der Nocken dazu ausgestaltet ist, derart mit einer oszillierenden Nabe (110) des Körperpflegegeräts (H) zusammenzuwirken, dass die oszillierende Bewegung der oszillierenden Nabe (110) auf eine oszillierende Bewegung des Nockens übertragen wird.

9. Wandleranordnung (100) nach Anspruch 1, wobei der Stößel über eine elastische Kupplung bewegbar dem äußeren Gehäuse (104) zugeordnet ist.

10. Wandleranordnung (100) nach Anspruch 9, wobei der Nocken ferner einen Punkt umfasst, der dazu ausgestaltet ist, mit der Nockenstößelfläche zusammenzuwirken und zu bewirken, dass der Stößel entlang der Mittelachse hin- und hergeht.

11. Wandleranordnung (100) nach Anspruch 10, wobei die Nockenstößelfläche bogenförmig ist.

12. Wandleranordnung (100) nach Anspruch 9, wobei der Nocken eine Aussparung (396) mit einer Nockenaussparungsprofilfläche (398) umfasst, wobei die Nockenstößelfläche eng mit der Nockenaussparungsprofilfläche (398) zusammenwirkt, um zu bewirken, dass der Stößel entlang der Mittelachse hin- und hergeht.

13. Wandleranordnung (100) nach Anspruch 1, ferner umfassend:
das äußere Gehäuse (104), das eines aus einem Schlitz, der mit der Mittelachse ausgerichtet ist, und einem Vorsprung aufweist; und
den Stößel, der das andere aus dem Schlitz, der mit der Mittelachse ausgerichtet ist, und dem Vorsprung aufweist, wobei der Vorsprung verschiebbar in dem Schlitz aufnehmbar ist, um eine Bewegung des Stößels auf eine hin-und hergehende Bewegung entlang der Mittelachse zu beschränken.

14. Wandleranordnung (100) nach Anspruch 1, ferner umfassend:
den Stößel, der elastisch mit dem äußeren Gehäuse (104) gekoppelt und für eine hin- und hergehende Bewegung entlang der Mittelachse ausgestaltet ist; und
einen Kontaktpunkt, der so ausgestaltet ist, dass er verschieblich mit der Stößelfläche zusammenwirkt und in Bezug auf das äußere Gehäuse (104) eine oszillierende Bewegung um die Mittelachse aufweist, wobei die verschiebliche Schnittstelle des Kontaktpunktes und der Stößelfläche bewirkt, dass der Stößel entlang der Mittelachse hin- und hergeht, wenn der Kontaktpunkt um die Mittelachse oszilliert.

## Revendications

1. Ensemble convertisseur (100) pour convertir un mouvement oscillant en un mouvement de va-et-vient orthogonal, l'ensemble convertisseur (100) comprenant :
un boîtier externe (104) ayant un axe central ;
un premier suiveur de came (150) associé de manière mobile au boîtier externe (104) et configuré pour un mouvement de va-et-vient le long de l'axe central, le premier suiveur de came (150) comportant une rampe supérieure de suiveur de came (156) disposée sur un premier côté du premier suiveur de came (150), et une rampe inférieure de suiveur de came (158) disposée sur un second côté opposé du premier suiveur de came (150) ;
un second suiveur de came (151) associé de manière mobile au boîtier externe (104) et configuré pour un mouvement de va-et-vient le long de l'axe central (A1), le second suiveur de came (151) comportant une rampe supérieure de suiveur de came (156) disposée sur un premier côté du second suiveur de came (151) et une rampe inférieure de suiveur de came (158) disposée sur un second côté opposé du second suiveur de came (151) ;
une came pouvant être couplée de manière rotative au boîtier externe (104) et configurée pour un mouvement oscillant autour de l'axe central par rapport au boîtier externe (104) ; et
une première saillie de came (170) et une seconde saillie de came (171), chacune s'étendant à partir d'un premier côté de la came et étant configurée pour s'interfacer avec la rampe supérieure de suiveur de came (156) et la rampe inférieure de suiveur de came (158) du premier suiveur de came (150) et du second suiveur de came (151), respectivement ; et
dans lequel l'interaction du premier suiveur de came (150) avec la première saillie de came (170) et l'interaction du second suiveur de came (151) avec la seconde saillie de came (171) amènent le suiveur à aller et venir le long de l'axe central (A1) lorsque la came oscille autour de l'axe central (A1).

2. Ensemble convertisseur (100) de la revendication 1, dans lequel le boîtier externe (104) comporte une ouverture configurée pour recevoir un embout d'applicateur.

3. Ensemble convertisseur (100) de la revendication 2, dans lequel le suiveur comprend en outre une partie de montage d'embout d'applicateur.

4. Ensemble convertisseur (100) de la revendication 3, dans lequel l'embout d'applicateur peut être couplé à la partie de montage d'embout d'applicateur.

5. Ensemble convertisseur (100) de la revendication 4, dans lequel l'embout d'applicateur est un embout de pénétration (102).

6. Ensemble convertisseur (100) de la revendication 1, dans lequel la came comprend en outre une surface de profil de came positionnée pour s'interfacer avec la surface de suivi de came, et dans lequel la surface de profil de came est une hélice.

7. Ensemble convertisseur (100) de la revendication 1, dans lequel l'ensemble convertisseur (100) peut être couplé à une poignée d'appareil de soins personnels à travers le boîtier externe (104).

8. Ensemble convertisseur (100) de la revendication 7, dans lequel la came est configurée pour s'interfacer avec un moyeu oscillant (110) de l'appareil de soins personnels (H), de sorte que le mouvement oscillant du moyeu oscillant (110) soit transféré au mouvement oscillant de la came.

9. Ensemble convertisseur (100) de la revendication 1, dans lequel le suiveur est associé de manière mobile au boîtier externe (104) par un couplage élastique.

10. Ensemble convertisseur (100) de la revendication 9, dans lequel la came comprend en outre un point configuré pour s'interfacer avec la surface de suivi de came et amener le suiveur à aller et venir le long de l'axe central.

11. Ensemble convertisseur (100) de la revendication 10, dans lequel la surface de suivi de came est arquée.

12. Ensemble convertisseur (100) de la revendication 9, dans lequel la came comprend un évidement (396) avec une surface de profil d'évidement de came (398), dans lequel la surface de suiveur de came interagit étroitement avec la surface de profil d'évidement de came (398) pour amener le suiveur à aller et venir le long de l'axe central.

13. Ensemble convertisseur (100) de la revendication 1, comprenant en outre :
le boîtier externe (104) ayant l'une parmi une fente alignée avec l'axe central et une saillie ; et
le suiveur ayant l'autre parmi la fente alignée avec l'axe central et la saillie,
dans lequel la saillie peut être reçue de manière coulissante à l'intérieur de la fente pour restreindre le déplacement du suiveur à un mouvement de va-et-vient le long de l'axe central.

14. Ensemble convertisseur (100) de la revendication 1, comprenant en outre :
le suiveur couplé élastiquement au boîtier externe (104) et configuré pour un mouvement de va-et-vient le long de l'axe central ; et
un point de contact configuré pour s'interfacer par glissement avec la surface de suivi et présenter un mouvement oscillant autour de l'axe central par rapport au boîtier externe (104), dans lequel l'interface coulissante du point de contact et de la surface de suivi amène le suiveur à aller et venir le long de l'axe central lorsque le point de contact oscille autour de l'axe central.
